(19)

**Europäisches Patentamt**
**European Patent Office**
**Office européen des brevets**

(11) **EP 4 550 132 A1**

(12) **EUROPEAN PATENT APPLICATION**

(43) Date of publication:
07.05.2025 Bulletin 2025/19

(21) Application number: 24211095.5

(22) Date of filing: 06.11.2024

(51) International Patent Classification (IPC):
**G06F 9/451** (2018.01)    **G06F 40/174** (2020.01)
**G06N 20/00** (2019.01)

(52) Cooperative Patent Classification (CPC):
**G06F 9/451; G06F 40/174; G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 06.11.2023 US 202318502223

(71) Applicant: UiPath, Inc.
**New York NY 10017 (US)**

(72) Inventors:
• VOICU, Cosmin
**New York, 10017 (US)**
• MIRON, Ion
**New York, 10017 (US)**
• MARCULET, Dan
**New York, 10017 (US)**
• PETRESCU, Alexandru-Cristian
**New York, 10017 (US)**

(74) Representative: Ungria López, Javier et al
**Avda. Ramón y Cajal, 78**
**28043 Madrid (ES)**

(54) **USER INTERFACE AUTOMATION USING ROBOTIC PROCESS AUTOMATIONS THAT DETECT USER INTERFACE ELEMENTS NOT VISIBLE ON A DISPLAY AND FILLS A FORM**

(57)     A method is provided. The method is for detecting and automatically filling user interface (UI) elements of a page that are not visible on a screen. The method is executed by an interface engine implemented as a computer program within a computing environment. The method includes analyzing document object model (DOM) of the page to extract DOM text of relevant UI elements of the UI elements. The method includes performing computer vision (CV) analysis to determine types the relevant UI elements and extrapolating target UI elements of an invisible region of the page from the relevant UI elements.

EP 4 550 132 A1

**Description**

FIELD

This disclosure generally relates to automation, and more particularly to an interface engine that provides user interface (UI) automation using one or more robotic process automations (RPAs) to detect and fill a form.

BACKGROUND

Generally, long forms can be presented in UIs such that portions of the long forms are both visible and not visible on a screen. Conventional clipboard technology uses computer vision (CV) based detection for destination analysis of the screen to determine input fields thereon. In this way, the conventional clipboard technology focuses on visible input fields and fails to detect the input fields not visible on the screen.

Another problem with conventional clipboard technology is that, when a user wants to paste source field data into a long form using a conventional clipboard technology, the user will only be able to paste the source field data in visible input fields of the long form. In turn, the input fields not visible on the screen (e.g., are only visible if manually scrolled to) cannot be mapped with the source field data by the conventional clipboard technology. This problem is compounded as a user repeatedly scrolls partially and reuses the conventional clipboard technology to map new iterations of visible input fields on the screen.

A solution is needed to fill and/or complete long forms in automation.

SUMMARY

According to one or more embodiments, a method is provided. The method is for detecting and automatically filling one or more user interface (UI) elements of a page that are not visible on a screen. The method is executed by an interface engine implemented as a computer program within a computing environment. The method includes analyzing document object model (DOM) of the page to extract DOM text of one or more relevant UI elements of the one or more UI elements. The method includes performing computer vision (CV) analysis to determine one or more types the one or more relevant UI elements and extrapolating one or more target UI elements of an invisible region of the page from the one or more relevant UI elements.

According to one or more embodiments, the above method can be implemented in a system, a computer product, and an apparatus.

BRIEF DESCRIPTION OF THE DRAWINGS

In order that the advantages of certain embodiments herein will be readily understood, a more particular description will be rendered by reference to specific embodiments that are illustrated in the appended drawings. While it should be understood that these drawings depict only typical embodiments and are not therefore to be considered to be limiting of its scope, the one or more embodiments herein will be described and explained with additional specificity and detail through the use of the accompanying drawings, in which:

FIG. 1 depicts an architectural diagram illustrating an automation system according to one or more embodiments.

FIG. 2 depicts an architectural diagram illustrating a RPA system according to one or more embodiments.

FIG. 3 depicts an architectural diagram illustrating a deployed RPA system, according to one or more embodiments.

FIG. 4 depicts an architectural diagram illustrating relationships between a designer, activities, and drivers according to one or more embodiments.

FIG. 5 depicts an architectural diagram illustrating a computing system according to one or more embodiments.

FIG. 6 illustrates an example of a neural network that has been trained to recognize graphical elements in an image according to one or more embodiments.

FIG. 7 illustrates an example of a neuron according to one or more embodiments.

FIG. 8 depicts a flowchart illustrating a process for training AI/

ML model(s) according to one or more embodiments.

FIG. 9 depicts a flowchart illustrating a process according to one or more embodiments.

FIG. 10 depicts an interface according to one or more embodiments.

FIG. 11 depicts an interface according to one or more embodiments.

FIG. 12 depicts an example code according to one or more embodiments.

FIG. 13 depicts a flowchart illustrating a process according to one or more embodiments.

Unless otherwise indicated, similar reference characters denote corresponding features consistently throughout the attached drawings.

DETAILED DESCRIPTION OF THE EMBODIMENTS

This disclosure generally relates to automation, and more particularly to an interface engine that provides user interface (UI) automation using one or more robotic process automations (RPAs) to fill a form. By way of example, the interface engine provides UI automation using one or more RPAs that detect UI elements not visible on a display (e.g., outside a viewable region of a UI presented on a screen) and filling/completing a form therein. The UI elements can include, but are not limited to, one or more input fields of the form that are not visible within the viewable region of the UI presented on the screen. The filling/completing of the one or more input field can be performed by the interface engine without moving or scrolling the UI presented on the screen. Implementing the interface engine can be performed by a computing system (as described herein).

According to one or more embodiments, the interface engine performs one or more operations for detecting UI elements that are not visible on the screen while automatically filling a long form/page. The interface engine can analyze document object model (DOM) of the long form/page to extract DOM text of relevant UI elements, perform computer vision (CV) analysis to determine types of the relevant UI elements, and extrapolate target UI elements of an invisible region of the long form/page from the relevant UI elements. The interface engine can also include linking the DOM text to the target UI elements based on the types and the relevant UI elements as determined by the CV analysis. The extrapolating by the interface engine includes searching for similar hypertext markup language (HTML) structures (e.g., relevant DOM text corresponding to the target UI elements) from the DOM. Further, the interface engine can find fields (i.e., UI elements) of the long form/page from both visible and invisible regions and can extract data from a source to paste into the fields (e.g., at a subsequent or destination screen). Further, the interface engine also has AI/ML capabilities to detect the UI elements and automatically fill the long form/page.

Thus, one or more advantages, technical effects, and/or benefits of the interface engine include being capable of identifying UI elements that are not visible on a screen without scrolling or moving a page presented by the screen, that is otherwise not currently available or currently performed by the conventional clipboard technology. In this regard, the interface engine improves UI automation to identify input field elements and reduces time consumed to overcome a scroll activity performed by user to indicate the target UI element.

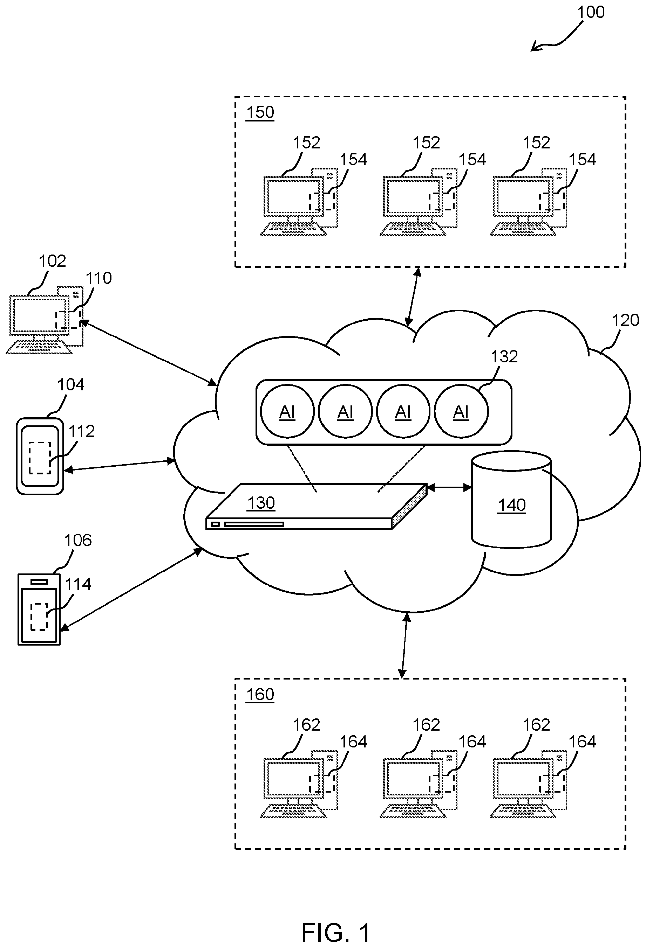

FIG. 1 is an architectural diagram illustrating a hyper-automation system 100, according to one or more embodiments. "Hyper-automation," as used herein, refers to automation systems that bring together components of process automation, integration tools, and technologies that amplify the ability to automate work. For instance, RPA may be used at the core of a hyper-automation system in some embodiments, and in certain embodiments, automation capabilities may be expanded with artificial intelligence and/or machine (AI/ML), process mining, analytics, and/or other advanced tools. As the hyper-automation system learns processes, trains AI/ML models, and employs analytics, for example, more and more knowledge work may be automated, and computing systems in an organization, e.g., both those used by individuals and those that run autonomously, may all be engaged to be participants in the hyper-automation process. Hyper-automation systems of some embodiments allow users and organizations to efficiently and effectively discover, understand, and scale automations.

Hyper-automation system 100 includes user computing systems, for example desktop computer 102, tablet 104, and smart phone 106. However, any desired computing system may be used without deviating from the scope of one or more embodiments herein including, but not limited to, smart watches, laptop computers, servers, Internet-of-Things (IoT) devices, etc. Also, while three user computing systems are shown in FIG. 1, any suitable number of computing systems may be used without deviating from the scope of the one or more embodiments herein. For instance, in some embodiments, dozens, hundreds, thousands, or millions of computing systems may be used. The user computing systems may be actively used by a user or run automatically without much or any user input.

Each computing system 102, 104, 106 has respective automation process(es) 110, 112, 114 running thereon. Automation process(es) 102, 104, 106 may include, but are not limited to, RPA robots, part of an operating system, downloadable application(s) for the respective computing system, any other suitable software and/or hardware, or any combination of these without deviating from the scope of the one or more embodiments herein. In some embodiments, one or more of process(es) 110, 112, 114 may be listeners. Listeners may be RPA robots, part of an operating system, a downloadable application for the respective computing system, or any other software and/or hardware without deviating from the scope of the one or more embodiments herein. Indeed, in some embodiments, the logic of the listener(s) is implemented partially or completely via physical hardware.

Listeners monitor and record data pertaining to user interactions with respective computing systems and/or operations of unattended computing systems and send the data to a core hyper-automation system 120 via a network (e.g., a local area network (LAN), a mobile communications network, a satellite communications network, the Internet, any combination thereof, etc.). The data may include, but is not limited to, which buttons were clicked, where a mouse was moved, the text that was entered in a field, that one window was minimized and another was opened, the application associated with a window, etc. In certain embodiments, the data from the listeners may be sent periodically as part of a heartbeat message. In some embodiments, the data may be sent to a core hyper-automation system 120 once a predetermined amount of data has been collected, after a predetermined time period has elapsed, or both. One or more servers, for example server 130, receive and store data from the listeners in a database, for example a database 140.

Automation processes may execute the logic developed in workflows during design time. In the case of RPA, workflows may include a set of steps, defined herein as "activities," that are executed in a sequence or some other logical flow. Each activity may include an action, for example clicking a button, reading a file, writing to a log panel, etc. In some embodiments, workflows may be nested or embedded.

Long-running workflows for RPA in some embodiments are master projects that support service orchestration, human intervention, and long-running transactions in unattended environments. See U.S. Patent No. 10,860,905, which is incorporated by reference for all it contains. Human intervention comes into play when certain processes require human inputs to handle exceptions, approvals, or validation before proceeding to the next step in the activity. In this situation, the process execution is suspended, freeing up the RPA robots until the human task completes.

A long-running workflow may support workflow fragmentation via persistence activities and may be combined with invoke process and non-user interaction activities, orchestrating human tasks with RPA robot tasks. In some embodiments, multiple or many computing systems may participate in executing the logic of a long-running workflow. The long-running workflow may run in a session to facilitate speedy execution. In some embodiments, long-running workflows may orchestrate background processes that may contain activities performing Application Programming Interface (API) calls and running in the long-running workflow session. These activities may be invoked by an invoke process activity in some embodiments. A process with user interaction activities that runs in a user session may be called by starting a job from a conductor activity (conductor described in more detail later herein). The user may interact through tasks that require forms to be completed in the conductor in some embodiments. Activities may be included that cause the RPA robot to wait for a form task to be completed and then resume the long-running workflow.

One or more of automation process(es) 110, 112, 114 is in communication with core hyper-automation system 120. In some embodiments, core hyper-automation system 120 may run a conductor application on one or more servers, for example server 130. While one server 130 is shown for illustration purposes, multiple or many servers that are proximate to one another or in a distributed architecture may be employed without deviating from the scope of the one or more embodiments herein. For instance, one or more servers may be provided for conductor functionality, AI/ML model serving, authentication, governance, and/or any other suitable functionality without deviating from the scope of the one or more embodiments herein. In some embodiments, core hyper-automation system 120 may incorporate or be part of a public cloud architecture, a private cloud architecture, a hybrid cloud architecture, etc. In certain embodiments, core hyper-automation system 120 may host multiple software-based servers on one or more computing systems, for example the server 130. In some embodiments, one or more servers of core hyper-automation system 120, for example the server 130, may be implemented via one or more virtual machines (VMs).

In some embodiments, one or more of automation process(es) 110, 112, 114 may call one or more AI/ML models 132 deployed on or accessible by core hyper-automation system 120. AI/ML models 132 may be trained for any suitable purpose without deviating from the scope of the one or more embodiments herein, as discussed in detail herein. Two or more of AI/ML models 132 may be chained in some embodiments (e.g., in series, in parallel, or a combination thereof) such that they collectively provide collaborative output(s). AI/ML models 132 may perform or assist with computer vision (CV), optical character recognition (OCR), document processing and/or understanding, semantic learning and/or analysis, analytical predictions, process discovery, task mining, testing, automatic RPA workflow generation, sequence extraction, clustering detection, audio-to-text translation, any combination thereof, etc. However, any desired number and/or type(s) of AI/ML models may be used without deviating from the scope of the one or more embodiments herein. Using multiple AI/ML models may allow the system to develop a global picture of what is happening on a given computing system, for example. For instance, one AI/ML model could perform OCR, another could detect buttons, another could compare sequences, etc. Patterns may be determined individually by an AI/ML model or collectively by multiple AI/ML models. In certain embodiments, one or more AI/ML models are deployed locally on at least one of computing systems 102, 104, 106.

In some embodiments, multiple AI/ML models 132 may be used. Each AI/ML model 132 is an algorithm (or model) that runs on the data, and the AI/ML model itself may be a deep learning neural network (DLNN) of trained artificial "neurons" that are trained in training data, for example. In some embodiments, AI/ML models 132 may have multiple layers that perform various functions, for example statistical modeling (e.g., hidden Markov models (HMMs)), and utilize deep learning techniques (e.g., long short term memory (LSTM) deep learning, encoding of previous hidden states, etc.) to perform the desired functionality.

Hyper-automation system 100 may provide four main groups of functionality in some embodiments: (1) discovery; (2) building automations; (3) management; and (4) engagement. Automations (e.g., run on a user computing system, a server, etc.) may be run by software robots, for example RPA robots, in some embodiments. For instance, attended robots, unattended robots, and/or test robots may be used. Attended robots work with users to assist them with tasks (e.g., via UiPath Assistant™). Unattended robots work independently of users and may run in the background, potentially without user knowledge. Test robots are unattended robots that run test cases against applications or RPA workflows. Test robots may be run on multiple computing systems in parallel in some embodiments.

The discovery functionality may discover and provide automatic recommendations for different opportunities of automations of business processes. Such functionality may be implemented by one or more servers, for example server 130. The discovery functionality may include providing an automation hub, process mining, task mining, and/or task capture in some embodiments. The automation hub (e.g., UiPath Automation Hub™) may provide a mechanism for managing automation rollout with visibility and control. Automation ideas may be crowdsourced from employees via a submission form, for example. Feasibility and return on investment (ROI) calculations for automating these ideas may be provided, documentation for future automations may be collected, and collaboration may be provided to get from automation discovery to build-out faster.

Process mining (e.g., via UiPath Automation Cloud™ and/or UiPath AI Center™) refers to the process of gathering and analyzing the data from applications (e.g., enterprise resource planning (ERP) applications, customer relation management (CRM) applications, email applications, call center applications, etc.) to identify what end-to-end processes exist in an organization and how to automate them effectively, as well as indicate a possible impact of the automation. This data may be gleaned from user computing systems 102, 104, 106 by listeners, for example, and processed by servers, for example server 130. One or more AI/ML models 132 may be employed for this purpose in some embodiments. This information may be exported to the automation hub to speed up implementation and avoid manual information transfer. The goal of process mining may be to increase business value by automating processes within an organization. Some examples of process mining goals include, but are not limited to, increasing profit, improving customer satisfaction, regulatory and/or contractual compliance, improving employee efficiency, etc.

Task mining (e.g., via UiPath Automation Cloud™ and/or UiPath AI Center™) identifies and aggregates workflows (e.g., employee workflows), and then applies AI to expose patterns and variations in day-to-day tasks, scoring such tasks for ease of automation and potential savings (e.g., time and/or cost savings). One or more AI/ML models 132 may be employed to uncover recurring task patterns in the data. Repetitive tasks that are ripe for automation may then be identified. This information may initially be provided by listeners and analyzed on servers of core hyper-automation system 120, for example server 130, in some embodiments. The findings from task mining (e.g., extensive application markup language (XAML) process data) may be exported to process documents or to a designer application for example UiPath Studio™ to create and deploy automations more rapidly.

Task mining in some embodiments may include taking screenshots with user actions (e.g., mouse click locations, keyboard inputs, application windows and graphical elements the user was interacting with, timestamps for the interactions, etc.), collecting statistical data (e.g., execution time, number of actions, text entries, etc.), editing and annotating screenshots, specifying types of actions to be recorded, etc.

Task capture (e.g., via UiPath Automation Cloud™ and/or UiPath AI Center™) automatically documents attended processes as users work or provides a framework for unattended processes. Such documentation may include desired tasks to automate in the form of process definition documents (PDDs), skeletal workflows, capturing actions for each part of a process, recording user actions and automatically generating a comprehensive workflow diagram including the details about each step, Microsoft Word® documents, XAML files, and other documentation. Build-ready workflows may be exported directly to a designer application in some embodiments, for example UiPath Studio™. Task capture may simplify the requirements gathering process for both subject matter experts explaining a process and Center of Excellence (CoE) members providing production-grade automations.

Building automations may be accomplished via a designer application (e.g., UiPath Studio™, UiPath StudioX™, or UiPath Web™). For instance, RPA developers of an PA development facility 150 may use RPA designer applications 154 of computing systems 152 to build and test automations for various applications and environments, for example web, mobile, SAP®, and virtualized desktops. API integration may be provided for various applications, technologies, and platforms. Predefined activities, drag-and-drop modeling, and a workflow recorder, may make automation easier with minimal coding. Document understanding functionality may be provided via drag-and-drop AI skills for data extraction and interpretation that call one or more AI/ML models 132. Such automations may process virtually any document type and format, including tables, checkboxes, signatures, and handwriting. When data is validated or exceptions are handled, this information may be used to retrain the respective AI/ML models, improving their accuracy over time.

An integration service may allow developers to seamlessly combine user interface (UI) automation with API automation, for example. Automations may be built that require APIs or traverse both API and non-API applications and systems. A repository (e.g., UiPath Object Repository™) or marketplace (e.g., UiPath Marketplace™) for pre-built RPA and AI templates and solutions may be provided to allow developers to automate a wide variety of processes more quickly. Thus, when building automations, hyper-automation system 100 may provide user interfaces, development environments, API integration, pre-built and/or custom-built AI/ML models, development templates, integrated development environments (IDEs), and advanced AI capabilities. Hyper-automation system 100 enables development, deployment, management, configuration, monitoring, debugging, and maintenance of RPA robots in some embodiments, which may provide automations for hyper-automation system 100.

In some embodiments, components of hyper-automation system 100, for example designer application(s) and/or an external rules engine, provide support for managing and enforcing governance policies for controlling various functionality provided by hyper-automation system 100. Governance is the ability for organizations to put policies in place to prevent users from developing automations (e.g., RPA robots) capable of taking actions that may harm the organization, for example violating the E.U. General Data Protection Regulation (GDPR), the U.S. Health Insurance Portability and Accountability Act (HIPAA), third party application terms of service, etc. Since developers may otherwise create automations that violate privacy laws, terms of service, etc. while performing their automations, some embodiments implement access control and governance restrictions at the robot and/or robot design application level. This may provide an added level of security and compliance into to the automation process development pipeline in some embodiments by preventing developers from taking dependencies on unapproved software libraries that may either introduce security risks or work in a way that violates policies, regulations, privacy laws, and/or privacy policies. See U.S. Nonprovisional Patent Application No. 16/924,499, which is incorporated by reference for all it contains.

The management functionality may provide management, deployment, and optimization of automations across an organization. The management functionality may include orchestration, test management, AI functionality, and/or insights in some embodiments. Management functionality of hyper-automation system 100 may also act as an integration point with third-party solutions and applications for automation applications and/or RPA robots. The management capabilities of hyper-automation system 100 may include, but are not limited to, facilitating provisioning, deployment, configuration, queuing, monitoring, logging, and interconnectivity of RPA robots, among other things.

A conductor application, for example UiPath Orchestrator™ (which may be provided as part of the UiPath Automation Cloud™ in some embodiments, or on premises, in VMs, in a private or public cloud, in a Linux™ VM, or as a cloud native single container suite via UiPath Automation Suite™), provides orchestration capabilities to deploy, monitor, optimize, scale, and ensure security of RPA robot deployments. A test suite (e.g., UiPath Test Suite™) may provide test management to monitor the quality of deployed automations. The test suite may facilitate test planning and execution, meeting of requirements, and defect traceability. The test suite may include comprehensive test reporting.

Analytics software (e.g., UiPath Insights™) may track, measure, and manage the performance of deployed automations. The analytics software may align automation operations with specific key performance indicators (KPIs) and strategic outcomes for an organization. The analytics software may present results in a dashboard format for better understanding by human users.

A data service (e.g., UiPath Data Service™) may be stored in database 140, for example, and bring data into a single, scalable, secure place with a drag-and-drop storage interface. Some embodiments may provide low-code or no-code data modeling and storage to automations while ensuring seamless access, enterprise-grade security, and scalability of the data. AI functionality may be provided by an AI center (e.g., UiPath AI Center™), which facilitates incorporation of AI/ML models into automations. Pre-built AI/ML models, model templates, and various deployment options may make such functionality accessible even to those who are not data scientists. Deployed automations (e.g., RPA robots) may call AI/ML models from the AI center, for example AI/ML models 132. Performance of the AI/ML models may be monitored, and be trained and improved using human-validated data, for example that provided by data review center 160. Human reviewers may provide labeled data to core hyper-automation system 120 via a review application 152 on computing systems 154. For instance, human reviewers may validate that predictions by AI/ML models 132 are accurate or provide corrections otherwise. This dynamic input may then be saved as training data for retraining AI/ML models 132, and may be stored in a database for example database 140, for example. The AI center may then schedule and execute training jobs to train the new versions of the AI/ML models using the training data. Both positive and negative examples may be stored and used for retraining of AI/ML models 132.

The engagement functionality engages humans and automations as one team for seamless collaboration on desired processes. Low-code applications may be built (e.g., via UiPath Apps™) to connect browser tabs and legacy software, even that lacking APIs in some embodiments. Applications may be created quickly using a web browser through a rich library of drag-and-drop controls, for instance. An application can be connected to a single automation or multiple automations.

An action center (e.g., UiPath Action Center™) provides a straightforward and efficient mechanism to hand off processes from automations to humans, and vice versa. Humans may provide approvals or escalations, make exceptions, etc. The automation may then perform the automatic functionality of a given workflow.

A local assistant may be provided as a launchpad for users to launch automations (e.g., UiPath Assistant™). This functionality may be provided in a tray provided by an operating system, for example, and may allow users to interact with RPA robots and RPA robot-powered applications on their computing systems. An interface may list automations approved for a given user and allow the user to run them. These may include ready-to-go automations from an automation marketplace, an internal automation store in an automation hub, etc. When automations run, they may run as a local instance in parallel with other processes on the computing system so users can use the computing system while the automation performs its actions. In certain embodiments, the assistant is integrated with the task capture functionality such that users can document their soon-to-be-automated processes from the assistant launchpad.

Chatbots (e.g., UiPath Chatbots™), social messaging applications, an/or voice commands may enable users to run automations. This may simplify access to information, tools, and resources users need in order to interact with customers or perform other activities. Conversations between people may be readily automated, as with other processes. Trigger RPA robots kicked off in this manner may perform operations for example checking an order status, posting data in a CRM, etc., potentially using plain language commands.

End-to-end measurement and government of an automation program at any scale may be provided by hyper-automation system 100 in some embodiments. Per the above, analytics may be employed to understand the performance of automations (e.g., via UiPath Insights™). Data modeling and analytics using any combination of available business metrics and operational insights may be used for various automated processes. Custom-designed and pre-built dashboards allow data to be visualized across desired metrics, new analytical insights to be discovered, performance indicators to be tracked, ROI to be discovered for automations, telemetry monitoring to be performed on user computing systems, errors and anomalies to be detected, and automations to be debugged. An automation management console (e.g., UiPath Automation Ops™) may be provided to manage automations throughout the automation lifecycle. An organization may govern how automations are built, what users can do with them, and which automations users can access.

Hyper-automation system 100 provides an iterative platform in some embodiments. Processes can be discovered, automations can be built, tested, and deployed, performance may be measured, use of the automations may readily be provided to users, feedback may be obtained, AI/ML models may be trained and retrained, and the process may repeat itself. This facilitates a more robust and effective suite of automations.

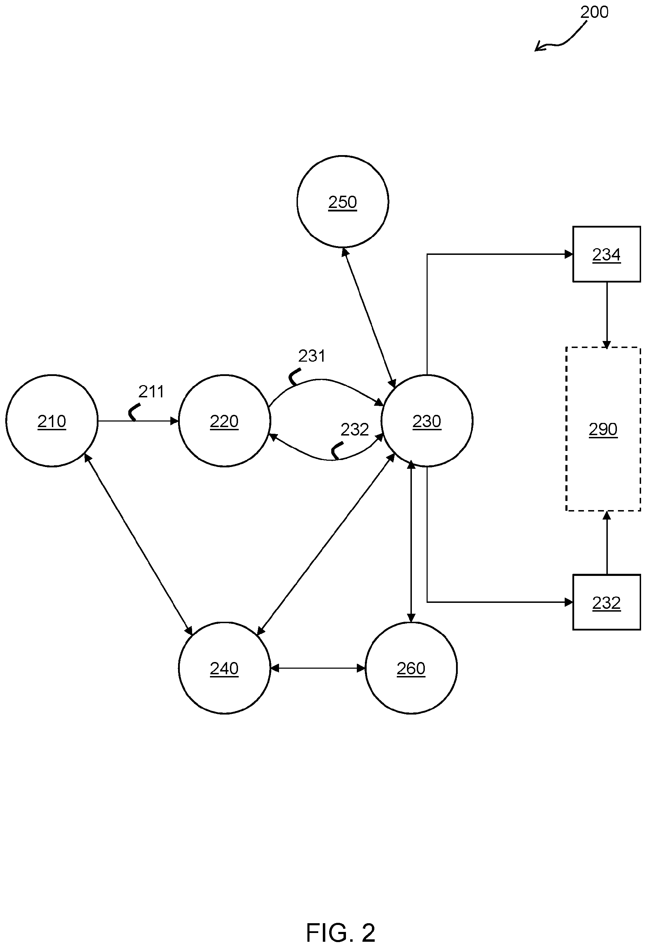

FIG. 2 is an architectural diagram illustrating an RPA system 200, according to one or more embodiments. In some embodiments, RPA system 200 is part of hyper-automation system 100 of FIG. 1. RPA system 200 includes a designer 210 that allows a developer to design and implement workflows. Designer 210 may provide a solution for application integration, as well as automating third-party applications, administrative Information Technology (IT) tasks, and business IT processes. Designer 210 may facilitate development of an automation project, which is a graphical representation of a business process. Simply put, designer 210 facilitates the development and deployment (as represented by arrow 211) of workflows and robots. In some embodiments, designer 210 may be an application that runs on a user's desktop, an application that runs remotely in a VM, a web application, etc.

The automation project enables automation of rule-based processes by giving the developer control of the execution order and the relationship between a custom set of steps developed in a workflow, defined herein as "activities" per the above. One commercial example of an embodiment of designer 210 is UiPath Studio™. Each activity may include an action, for example clicking a button, reading a file, writing to a log panel, etc. In some embodiments, workflows may be nested or embedded.

Some types of workflows may include, but are not limited to, sequences, flowcharts, Finite State Machines (FSMs), and/or global exception handlers. Sequences may be particularly suitable for linear processes, enabling flow from one activity to another without cluttering a workflow. Flowcharts may be particularly suitable to more complex business logic, enabling integration of decisions and connection of activities in a more diverse manner through multiple branching logic operators. FSMs may be particularly suitable for large workflows. FSMs may use a finite number of states in their execution, which are triggered by a condition (i.e., transition) or an activity. Global exception handlers may be particularly suitable for determining workflow behavior when encountering an execution error and for debugging processes.

Once a workflow is developed in designer 210, execution of business processes is orchestrated by conductor 220, which orchestrates one or more robots 230 that execute the workflows developed in designer 210. One commercial example of an embodiment of conductor 220 is UiPath Orchestrator™. Conductor 220 facilitates management of the creation, monitoring, and deployment of resources in an environment. Conductor 220 may act as an integration point with third-party solutions and applications. Per the above, in some embodiments, conductor 220 may be part of core hyper-automation system 120 of FIG. 1.

Conductor 220 may manage a fleet of robots 230, connecting and executing (as represented by arrow 231) robots 230 from a centralized point. Types of robots 230 that may be managed include, but are not limited to, attended robots 232, unattended robots 234, development robots (similar to unattended robots 234, but used for development and testing purposes), and nonproduction robots (similar to attended robots 232, but used for development and testing purposes). Attended robots 232 are triggered by user events and operate alongside a human on the same computing system. Attended robots 232 may be used with conductor 220 for a centralized process deployment and logging medium. Attended robots 232 may help the human user accomplish various tasks, and may be triggered by user events. In some embodiments, processes cannot be started from conductor 220 on this type of robot and/or they cannot run under a locked screen. In certain embodiments, attended robots 232 can only be started from a robot tray or from a command prompt. Attended robots 232 should run under human supervision in some embodiments.

Unattended robots 234 run unattended in virtual environments and can automate many processes. Unattended robots 234 may be responsible for remote execution, monitoring, scheduling, and providing support for work queues. Debugging for all robot types may be run in designer 210 in some embodiments. Both attended and unattended robots may automate (as represented by dashed box 290) various systems and applications including, but not limited to, mainframes, web applications, VMs, enterprise applications (e.g., those produced by SAP®, SalesForce®, Oracle®, etc.), and computing system applications (e.g., desktop and laptop applications, mobile device applications, wearable computer applications, etc.).

Conductor 220 may have various capabilities (as represented by arrow 232) including, but not limited to, provisioning, deployment, configuration, queueing, monitoring, logging, and/or providing interconnectivity. Provisioning may include creating and maintenance of connections between robots 230 and conductor 220 (e.g., a web application). Deployment may include assuring the correct delivery of package versions to assigned robots 230 for execution. Configuration may include maintenance and delivery of robot environments and process configurations. Queueing may include providing management of queues and queue items. Monitoring may include keeping track of robot identification data and maintaining user permissions. Logging may include storing and indexing logs to a database (e.g., a structured query language (SQL) or NoSQL database) and/or another storage mechanism (e.g., ElasticSearch®, which provides the ability to store and quickly query large datasets). Conductor 220 may provide interconnectivity by acting as the centralized point of communication for third-party solutions and/or applications.

Robots 230 are execution agents that implement workflows built in designer 210. One commercial example of some embodiments of robot(s) 230 is UiPath Robots™. In some embodiments, robots 230 install the Microsoft Windows® Service Control Manager (SCM)-managed service by default. As a result, such robots 230 can open interactive Windows® sessions under the local system account, and have the rights of a Windows® service.

In some embodiments, robots 230 can be installed in a user mode. For such robots 230, this means they have the same rights as the user under which a given robot 230 has been installed. This feature may also be available for High Density (HD) robots, which ensure full utilization of each machine at its maximum potential. In some embodiments, any type of robot 230 may be configured in an HD environment.

Robots 230 in some embodiments are split into several components, each being dedicated to a particular automation task. The robot components in some embodiments include, but are not limited to, SCM-managed robot services, user mode robot services, executors, agents, and command line. SCM-managed robot services manage and monitor Windows® sessions and act as a proxy between conductor 220 and the execution hosts (i.e., the computing systems on which robots 230 are executed). These services are trusted with and manage the credentials for robots 230. A console application is launched by the SCM under the local system.

User mode robot services in some embodiments manage and monitor Windows® sessions and act as a proxy between conductor 220 and the execution hosts. User mode robot services may be trusted with and manage the credentials for robots 230. A Windows® application may automatically be launched if the SCM-managed robot service is not installed.

Executors may run given jobs under a Windows® session (i.e., they may execute workflows. Executors may be aware of per-monitor dots per inch (DPI) settings. Agents may be Windows® Presentation Foundation (WPF) applications that display the available jobs in the system tray window. Agents may be a client of the service. Agents may request to start or stop jobs and change settings. The command line is a client of the service. The command line is a console application that can request to start jobs and waits for their output.

Having components of robots 230 split as explained above helps developers, support users, and computing systems more easily run, identify, and track what each component is executing. Special behaviors may be configured per component this way, for example setting up different firewall rules for the executor and the service. The executor may always be aware of DPI settings per monitor in some embodiments. As a result, workflows may be executed at any DPI, regardless of the configuration of the computing system on which they were created. Projects from designer 210 may also be independent of browser zoom level in some embodiments. For applications that are DPI-unaware or intentionally marked as unaware, DPI may be disabled in some embodiments.

RPA system 200 in this embodiment is part of a hyper-automation system. Developers may use designer 210 to build and test RPA robots that utilize AI/ML models deployed in core hyper-automation system 240 (e.g., as part of an AI center thereof). Such RPA robots may send input for execution of the AI/ML model(s) and receive output therefrom via core hyper-automation system 240.

One or more of robots 230 may be listeners, as described above. These listeners may provide information to core hyper-automation system 240 regarding what users are doing when they use their computing systems. This information may then be used by core hyper-automation system for process mining, task mining, task capture, etc.

An assistant/chatbot 250 may be provided on user computing systems to allow users to launch RPA local robots. The assistant may be located in a system tray, for example. Chatbots may have a user interface so users can see text in the chatbot. Alternatively, chatbots may lack a user interface and run in the background, listening using the computing system's microphone for user speech.

In some embodiments, data labeling may be performed by a user of the computing system on which a robot is executing or on another computing system that the robot provides information to. For instance, if a robot calls an AI/ML model that performs CV on images for VM users, but the AI/ML model does not correctly identify a button on the screen, the user may draw a rectangle around the misidentified or non-identified component and potentially provide text with a correct identification. This information may be provided to core hyper-automation system 240 and then used later for training a new version of the AI/ML model.

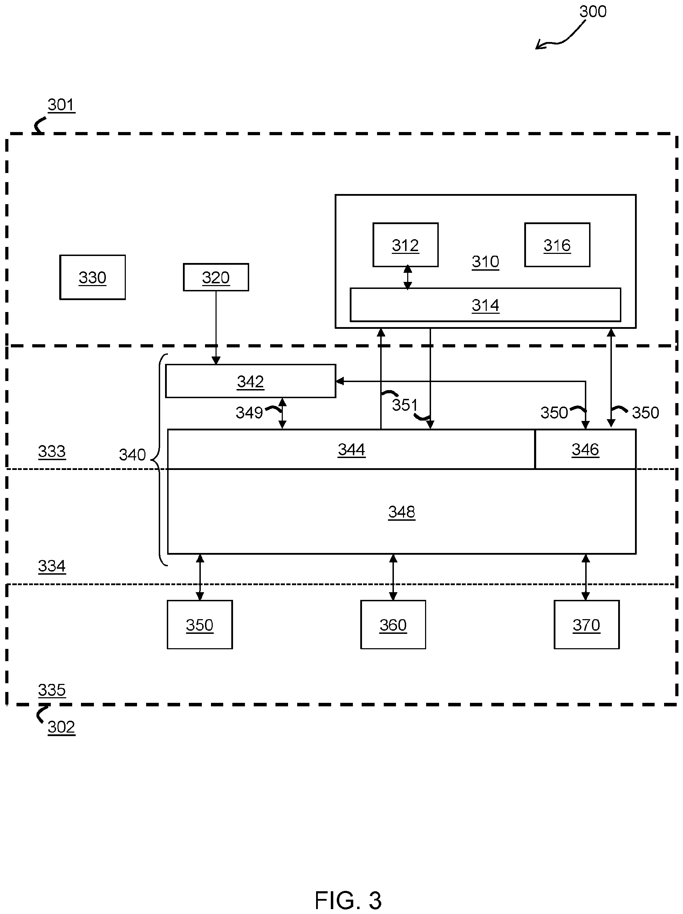

FIG. 3 is an architectural diagram illustrating a deployed RPA system 300, according to one or more embodiments. In some embodiments, RPA system 300 may be a part of RPA system 200 of FIG. 2 and/or hyper-automation system 100 of FIG. 1. Deployed RPA system 300 may be a cloud-based system, an on-premises system, a desktop-based system that offers enterprise level, user level, or device level automation solutions for automation of different computing processes, etc.

It should be noted that a client side 301, a server side 302, or both, may include any desired number of computing systems without deviating from the scope of the one or more embodiments herein. On the client side 301, a robot application 310 includes executors 312, an agent 314, and a designer 316. However, in some embodiments, designer 316 may not be running on the same computing system as executors 312 and agent 314. Executors 312 are running processes. Several business projects may run simultaneously, as shown in FIG. 3. Agent 314 (e.g., a Windows® service) is the single point of contact for all executors 312 in this embodiment. All messages in this embodiment are logged into conductor 340, which processes them further via database server 355, an AI/ML server 360, an indexer server 370, or any combination thereof. As discussed above with respect to FIG. 2, executors 312 may be robot components.

In some embodiments, a robot represents an association between a machine name and a username. The robot may manage multiple executors at the same time. On computing systems that support multiple interactive sessions running simultaneously (e.g., Windows® Server 2012), multiple robots may be running at the same time, each in a separate Windows® session using a unique username. This is referred to as HD robots above.

Agent 314 is also responsible for sending the status of the robot (e.g., periodically sending a "heartbeat" message indicating that the robot is still functioning) and downloading the required version of the package to be executed. The communication between agent 314 and conductor 340 is always initiated by agent 314 in some embodiments. In the notification scenario, agent 314 may open a WebSocket channel that is later used by conductor 330 to send commands to the robot (e.g., start, stop, etc.).

A listener 330 monitors and records data pertaining to user interactions with an attended computing system and/or operations of an unattended computing system on which listener 330 resides. Listener 330 may be an RPA robot, part of an operating system, a downloadable application for the respective computing system, or any other software and/or hardware without deviating from the scope of the one or more embodiments herein. Indeed, in some embodiments, the logic of the listener is implemented partially or completely via physical hardware.

On the server side 302, a presentation layer 333, a service layer 334, and a persistence layer 336 are included, as well as a conductor 340. The presentation layer 333 can include a web application 342, Open Data Protocol (OData) Representative State Transfer (REST) Application Programming Interface (API) endpoints 344, and notification and monitoring 346. The service layer 334 can include API implementation/business logic 348. The persistence layer 336 can include a database server 355, an AI/ML server 360, and an indexer server 370. For example, the conductor 340 includes the web application 342, the OData REST API endpoints 344, the notification and monitoring 346, and the API implementation/business logic 348. In some embodiments, most actions that a user performs in the interface of the conductor 340 (e.g., via browser 320) are performed by calling various APIs. Such actions may include, but are not limited to, starting jobs on robots, adding/removing data in queues, scheduling jobs to run unattended, etc. without deviating from the scope of the one or more embodiments herein. The web application 342 can be the visual layer of the server platform. In this embodiment, the web application 342 uses HTML and JavaScript (JS). However, any desired markup languages, script languages, or any other formats may be used without deviating from the scope of the one or more embodiments herein. The user interacts with webpages from the web application 342 via the browser 320 in this embodiment in order to perform various actions to control conductor 340. For instance, the user may create robot groups, assign packages to the robots, analyze logs per robot and/or per process, start and stop robots, etc.

In addition to web application 342, conductor 340 also includes service layer 334 that exposes OData REST API endpoints 344. However, other endpoints may be included without deviating from the scope of the one or more embodiments herein. The REST API is consumed by both web application 342 and agent 314. Agent 314 is the supervisor of one or more robots on the client computer in this embodiment.

The REST API in this embodiment includes configuration, logging, monitoring, and queueing functionality (represented by at least arrow 349). The configuration endpoints may be used to define and configure application users, permissions, robots, assets, releases, and environments in some embodiments. Logging REST endpoints may be used to log different information, for example errors, explicit messages sent by the robots, and other environment-specific information, for instance. Deployment REST endpoints may be used by the robots to query the package version that should be executed if the start job command is used in conductor 340. Queueing REST endpoints may be responsible for queues and queue item management, for example adding data to a queue, obtaining a transaction from the queue, setting the status of a transaction, etc.

Monitoring REST endpoints may monitor web application 342 and agent 314. Notification and monitoring API 346 may be REST endpoints that are used for registering agent 314, delivering configuration settings to agent 314, and for sending/receiving notifications from the server and agent 314. Notification and monitoring API 346 may also use WebSocket communication in some embodiments. As shown in FIG. 3, one or more the activities/actions described herein are represented by arrows 350 and 351.

The APIs in the service layer 334 may be accessed through configuration of an appropriate API access path in some embodiments, e.g., based on whether conductor 340 and an overall hyper-automation system have an on-premises deployment type or a cloud-based deployment type. APIs for conductor 340 may provide custom methods for querying stats about various entities registered in conductor 340. Each logical resource may be an OData entity in some embodiments. In such an entity, components for example the robot, process, queue, etc., may have properties, relationships, and operations. APIs of conductor 340 may be consumed by web application 342 and/or agents 314 in two ways in some embodiments: by getting the API access information from conductor 340, or by registering an external application to use the OAuth flow.

The persistence layer 336 includes a trio of servers in this embodiment - database server 355 (e.g., a SQL server), AI/ML server 360 (e.g., a server providing AI/ML model serving services, for example AI center functionality) and indexer server 370. Database server 355 in this embodiment stores the configurations of the robots, robot groups, associated processes, users, roles, schedules, etc. This information is managed through web application 342 in some embodiments. Database server 355 may manage queues and queue items. In some embodiments, database server 355 may store messages logged by the robots (in addition to or in lieu of indexer server 370). Database server 355 may also store process mining, task mining, and/or task capture-related data, received from listener 330 installed on the client side 301, for example. While no arrow is shown between listener 330 and database 355, it should be understood that listener 330 is able to communicate with database 355, and vice versa in some embodiments. This data may be stored in the form of PDDs, images, XAML files, etc. Listener 330 may be configured to intercept user actions, processes, tasks, and performance metrics on the respective computing system on which listener 330 resides. For example, listener 330 may record user actions (e.g., clicks, typed characters, locations, applications, active elements, times, etc.) on its respective computing system and then convert these into a suitable format to be provided to and stored in database server 355.

AI/ML server 360 facilitates incorporation of AI/ML models into automations. Pre-built AI/ML models, model templates, and various deployment options may make such functionality accessible even to those who are not data scientists. Deployed automations (e.g., RPA robots) may call AI/ML models from AI/ML server 360. Performance of the AI/ML models may be monitored, and be trained and improved using human-validated data. AI/ML server 360 may schedule and execute training jobs to train new versions of the AI/ML models.

AI/ML server 360 may store data pertaining to AI/ML models and ML packages for configuring various ML skills for a user at development time. An ML skill, as used herein, is a pre-built and trained ML model for a process, which may be used by an automation, for example. AI/ML server 460 may also store data pertaining to document understanding technologies and frameworks, algorithms and software packages for various AI/ML capabilities including, but not limited to, intent analysis, natural language processing (NLP), speech analysis, different types of AI/ML models, etc.

Indexer server 370, which is optional in some embodiments, stores and indexes the information logged by the robots. In certain embodiments, indexer server 370 may be disabled through configuration settings. In some embodiments, indexer server 370 uses ElasticSearch®, which is an open source project full-text search engine. Messages logged by robots (e.g., using activities like log message or write line) may be sent through the logging REST endpoint(s) to indexer server 370, where they are indexed for future utilization.

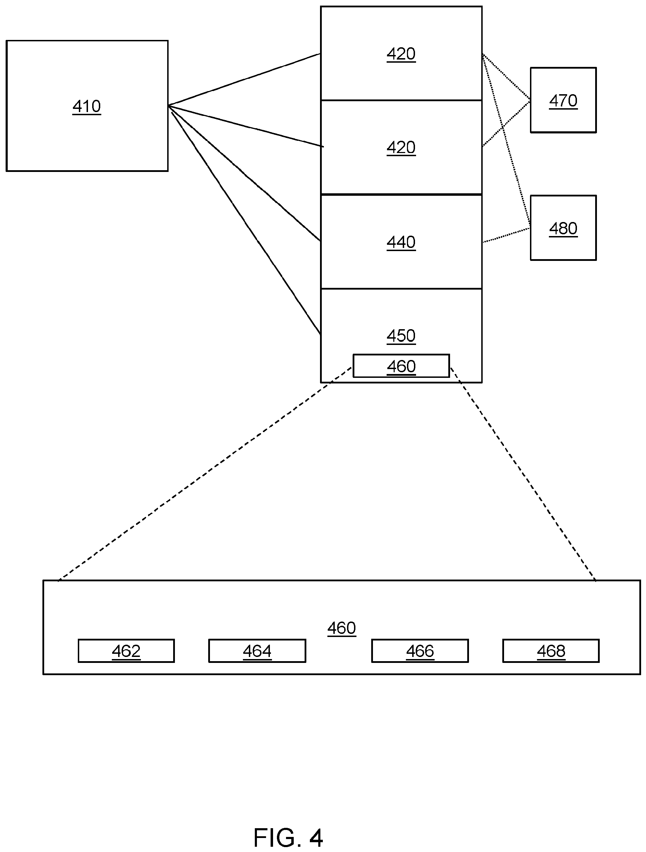

FIG. 4 is an architectural diagram illustrating the relationship between a designer 410, activities 420, 430, 440, 450, drivers 460, APIs 470, and AI/ML models 480 according to one or more embodiments. As described herein, a developer uses the designer 410 to develop workflows that are executed by robots. The various types of activities may be displayed to the developer in some embodiments. Designer 410 may be local to the user's computing system or remote thereto (e.g., accessed via VM or a local web browser interacting with a remote web server). Workflows may include user-defined activities 420, API-driven activities 430, AI/ML activities 440, and/or and UI automation activities 450. By way of example (as shown by the dotted lines), user-defined activities 420 and API-driven activities 440 interact with applications via their APIs. In turn, User-defined activities 420 and/or AI/ML activities 440 may call one or more AI/ML models 480 in some embodiments, which may be located locally to the computing system on which the robot is operating and/or remotely thereto.

Some embodiments are able to identify non-textual visual components in an image, which is called CV herein. CV may be performed at least in part by AI/ML model(s) 480. Some CV activities pertaining to such components may include, but are not limited to, extracting of text from segmented label data using OCR, fuzzy text matching, cropping of segmented label data using ML, comparison of extracted text in label data with ground truth data, etc. In some embodiments, there may be hundreds or even thousands of activities that may be implemented in user-defined activities 420. However, any number and/or type of activities may be used without deviating from the scope of the one or more embodiments herein.

UI automation activities 450 are a subset of special, lower-level activities that are written in lower-level code and facilitate interactions with the screen. UI automation activities 450 facilitate these interactions via drivers 460 that allow the robot to interact with the desired software. For instance, drivers 460 may include operating system (OS) drivers 462, browser drivers 464, VM drivers 466, enterprise application drivers 468, etc. One or more of AI/ML models 480 may be used by UI automation activities 450 in order to perform interactions with the computing system in some embodiments. In certain embodiments, AI/ML models 480 may augment drivers 460 or replace them completely. Indeed, in certain embodiments, drivers 460 are not included.

Drivers 460 may interact with the OS at a low level looking for hooks, monitoring for keys, etc. via OS drivers 462. Drivers 460 may facilitate integration with Chrome®, IE®, Citrix®, SAP®, etc. For instance, the "click" activity performs the same role in these different applications via drivers 460.

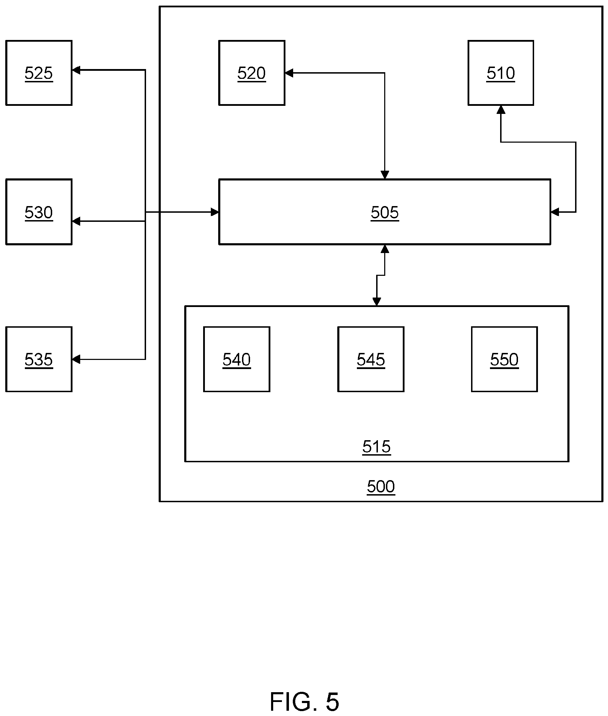

FIG. 5 is an architectural diagram illustrating a computing system 500 configured to provide an interface engine for RPAs according to one or more embodiments. In some embodiments, computing system 500 may be one or more of the computing systems depicted and/or described herein. In certain embodiments, computing system 500 may be part of a hyper-automation system, for example that shown in FIGS. 1 and 2. Computing system 500 includes a bus 505 or other communication mechanism for communicating information, and processor(s) 510 coupled to bus 505 for processing information. Processor(s) 510 may be any type of general or specific purpose processor, including a Central Processing Unit (CPU), an Application Specific Integrated Circuit (ASIC), a Field Programmable Gate Array (FPGA), a Graphics Processing Unit (GPU), multiple instances thereof, and/or any combination thereof. Processor(s) 510 may also have multiple processing cores, and at least some of the cores may be configured to perform specific functions. Multi-parallel processing may be used in some embodiments. In certain embodiments, at least one of processor(s) 510 may be a neuromorphic circuit that includes processing elements that mimic biological neurons. In some embodiments, neuromorphic circuits may not require the typical components of a Von Neumann computing architecture.

Computing system 500 further includes a memory 515 for storing information and instructions to be executed by processor(s) 510. Memory 515 can be comprised of any combination of random access memory (RAM), read-only memory (ROM), flash memory, cache, static storage for example a magnetic or optical disk, or any other types of non-transitory computer-readable media or combinations thereof. Non-transitory computer-readable media may be any available media that can be accessed by processor(s) 510 and may include volatile media, non-volatile media, or both. The media may also be removable, non-removable, or both.

Additionally, computing system 500 includes a communication device 520, for example a transceiver, to provide access to a communications network via a wireless and/or wired connection. In some embodiments, communication device 520 may be configured to use Frequency Division Multiple Access (FDMA), Single Carrier FDMA (SC-FDMA), Time Division Multiple Access (TDMA), Code Division Multiple Access (CDMA), Orthogonal Frequency Division Multiplexing (OFDM), Orthogonal Frequency Division Multiple Access (OFDMA), Global System for Mobile (GSM) communications, General Packet Radio Service (GPRS), Universal Mobile Telecommunications System (UMTS), cdma2000, Wideband CDMA (W-CDMA), High-Speed Downlink Packet Access (HSDPA), High-Speed Uplink Packet Access (HSUPA), High-Speed Packet Access (HSPA), Long Term Evolution (LTE), LTE Advanced (LTE-A), 802.11x, Wi-Fi, Zigbee, Ultra-WideBand (UWB), 802.16x, 802.15, Home Node-B (HnB), Bluetooth, Radio Frequency Identification (RFID), Infrared Data Association (IrDA), Near-Field Communications (NFC), fifth generation (5G) New Radio (NR), any combination thereof, and/or any other currently existing or future-implemented communications standard and/or protocol without deviating from the scope of the one or more embodiments herein. In some embodiments, communication device 520 may include one or more antennas that are singular, arrayed, panels, phased, switched, beamforming, beamsteering, a combination thereof, and or any other antenna configuration without deviating from the scope of the one or more embodiments herein.

Processor(s) 510 are further coupled via bus 505 to a display 525 (i.e., a screen), for example a plasma display, a Liquid Crystal Display (LCD), a Light Emitting Diode (LED) display, a Field Emission Display (FED), an Organic Light Emitting Diode (OLED) display, a flexible OLED display, a flexible substrate display, a projection display, a 4K display, a high definition display, a Retina® display, an In-Plane Switching (IPS) display, or any other suitable display for displaying information to a user. Display 525 may be configured as a touch (haptic) display, a three-dimensional (3D) touch display, a multi-input touch display, a multi-touch display, etc. using resistive, capacitive, surface-acoustic wave (SAW) capacitive, infrared, optical imaging, dispersive signal technology, acoustic pulse recognition, frustrated total internal reflection, etc. Any suitable display device and haptic I/O may be used without deviating from the scope of the one or more embodiments herein.

A keyboard 530 and a cursor control device 535, for example a computer mouse, a touchpad, etc., are further coupled to bus 505 to enable a user to interface with computing system 500. However, in certain embodiments, a physical keyboard and mouse may not be present, and the user may interact with the device solely through display 525 and/or a touchpad (not shown). Any type and combination of input devices may be used as a matter of design choice. In certain embodiments, no physical input device and/or display is present. For instance, the user may interact with computing system 500 remotely via another computing system in communication therewith, or computing system 500 may operate autonomously.

Memory 515 stores software modules that provide functionality when executed by processor(s) 510. The modules include an operating system 540 for computing system 500. The modules further include a module 545 (e.g., a module implementing an interface engine) that is configured to perform all or part of the processes described herein or derivatives thereof.

According to one or more embodiments, the module 545 can perform one or more operations, for example DOM analysis, DOM text extraction, CV analysis, and schema extraction.

According to one or more embodiments, the module 545 can also perform one or more operations, for example detecting framework, starting CV analysis, detecting top layers, extracting data, determining nodes (e.g., UiNodes), determining positions, detecting element types (by DOM, framework, CV, and/or element definition), filling automatic anchors, filling date times, cleaning elements, enriching elements, creating a data structure (e.g., a DOM tree, etc.), collecting relations (e.g., DOM relations), collecting dropdown information, collecting geometrical anchors, collecting radio, collecting values, collecting date time groups, and determining schema.

According to one or more embodiment, a DOM can be a programming API for documents, webpages, and other files, while a DOM tree can be considered a data structure, schema, or structure model of the DOM (e.g., of a webpage). By way of example, an attribute can be considered a node in the DOM (e.g., an API for a document), but not a node in the DOM tree (e.g., a structure of the document), while elements of the DOM can be provided as nodes of the DOM tree including attributes, tags, and children.

According to one or more embodiments, the module 545 also has AI/ML and RPA capabilities to perform the one or more operations herein. Computing system 500 may include one or more additional functional modules 550 that include additional functionality.

One skilled in the art will appreciate that a "system" could be embodied as a server, an embedded computing system, a personal computer, a console, a personal digital assistant (PDA), a cell phone, a tablet computing device, a quantum computing system, or any other suitable computing device, or combination of devices without deviating from the scope of the one or more embodiments herein. Presenting the above-described functions as being performed by a "system" is not intended to limit the scope of embodiments herein in any way, but is intended to provide one example of the many embodiments. Indeed, methods, systems, and apparatuses disclosed herein may be implemented in localized and distributed forms consistent with computing technology, including cloud computing systems. The computing system could be part of or otherwise accessible by a local area network (LAN), a mobile communications network, a satellite communications network, the Internet, a public or private cloud, a hybrid cloud, a server farm, any combination thereof, etc. Any localized or distributed architecture may be used without deviating from the scope of the one or more embodiments herein.

It should be noted that some of the system features described in this specification have been presented as modules, in order to more particularly emphasize their implementation independence. For example, a module may be implemented as a hardware circuit comprising custom very large scale integration (VLSI) circuits or gate arrays, off-the-shelf semiconductors for example logic chips, transistors, or other discrete components. A module may also be implemented in programmable hardware devices for example field programmable gate arrays, programmable array logic, programmable logic devices, graphics processing units, or other devices.

A module may also be at least partially implemented in software for execution by various types of processors. An identified unit of executable code may, for instance, include one or more physical or logical blocks of computer instructions that may, for instance, be organized as an object, procedure, or function. Nevertheless, the executables of an identified module need not be physically located together, but may include disparate instructions stored in different locations that, when joined logically together, comprise the module and achieve the stated purpose for the module. Further, modules may be stored on a computer-readable medium, which may be, for instance, a hard disk drive, flash device, RAM, tape, and/or any other such non-transitory computer-readable medium used to store data without deviating from the scope of the one or more embodiments herein.

Indeed, a module of executable code could be a single instruction, or many instructions, and may even be distributed over several different code segments, among different programs, and across several memory devices.

Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network.

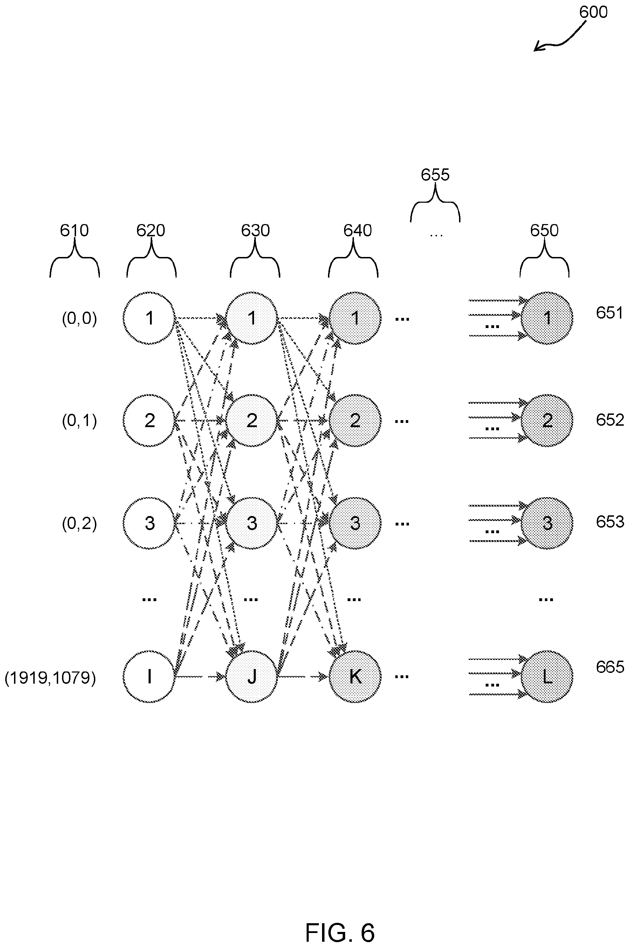

Various types of AI/ML models may be trained and deployed without deviating from the scope of the one or more embodiments herein. For instance, FIG. 6 illustrates an example of a neural network 600 that has been trained to recognize graphical elements in an image according to one or more embodiments. Here, neural network 600 receives pixels (as represented by column 610) of a screenshot image of a $1920 \times 1080$ screen as input for input "neurons" 1 to I of an input layer (as represented by column 620). In this case, I is 2,073,600, which is the total number of pixels in the screenshot image.

Neural network 600 also includes a number of hidden layers (as represented by column 630 and 640). Both DLNNs and shallow learning neural networks (SLNNs) usually have multiple layers, although SLNNs may only have one or two layers in some cases, and normally fewer than DLNNs. Typically, the neural network architecture includes the input layer, multiple intermediate layers (e.g., the hidden layers), and an output layer (as represented by column 650), as is the case in neural network 600.

A DLNN often has many layers (e.g., 10, 50, 200, etc.) and subsequent layers typically reuse features from previous layers to compute more complex, general functions. A SLNN, on the other hand, tends to have only a few layers and train relatively quickly since expert features are created from raw data samples in advance. However, feature extraction is laborious. DLNNs, on the other hand, usually do not require expert features, but tend to take longer to train and have more layers.

For both approaches, the layers are trained simultaneously on the training set, normally checking for overfitting on an isolated cross-validation set. Both techniques can yield excellent results, and there is considerable enthusiasm for both approaches. The optimal size, shape, and quantity of individual layers varies depending on the problem that is addressed by the respective neural network.

Returning to FIG. 6, pixels provided as the input layer are fed as inputs to the J neurons of hidden layer 1. While all pixels are fed to each neuron in this example, various architectures are possible that may be used individually or in combination including, but not limited to, feed forward networks, radial basis networks, deep feed forward networks, deep convolutional inverse graphics networks, convolutional neural networks, recurrent neural networks, artificial neural networks, long/short term memory networks, gated recurrent unit networks, generative adversarial networks, liquid state machines, auto encoders, variational auto encoders, denoising auto encoders, sparse auto encoders, extreme learning machines, echo state networks, Markov chains, Hopfield networks, Boltzmann machines, restricted Boltzmann machines, deep residual networks, Kohonen networks, deep belief networks, deep convolutional networks, support vector machines, neural Turing machines, or any other suitable type or combination of neural networks without deviating from the scope of the one or more embodiments herein.

Hidden layer 2 (630) receives inputs from hidden layer 1 (620), hidden layer 3 receives inputs from hidden layer 2 (630), and so on for all hidden layers until the last hidden layer (as represented by the ellipses 655) provides its outputs as inputs for the output layer. It should be noted that numbers of neurons I, J, K, and L are not necessarily equal, and thus, any desired number of layers may be used for a given layer of neural network 600 without deviating from the scope of the one or more embodiments herein. Indeed, in certain embodiments, the types of neurons in a given layer may not all be the same.

Neural network 600 is trained to assign a confidence score to graphical elements believed to have been found in the image. In order to reduce matches with unacceptably low likelihoods, only those results with a confidence score that meets or exceeds a confidence threshold may be provided in some embodiments. For instance, if the confidence threshold is 80%, outputs with confidence scores exceeding this amount may be used and the rest may be ignored. In this case, the output layer indicates that two text fields (as represented by outputs 661 and 662), a text label (as represented by output 663), and a submit button (as represented by output 665) were found. Neural network 600 may provide the locations, dimensions, images, and/or confidence scores for these elements without deviating from the scope of the one or more embodiments herein, which can be used subsequently by an RPA robot or another process that uses this output for a given purpose.

It should be noted that neural networks are probabilistic constructs that typically have a confidence score. This may be a score learned by the AI/ML model based on how often a similar input was correctly identified during training. For instance, text fields often have a rectangular shape and a white background. The neural network may learn to identify graphical elements with these characteristics with a high confidence. Some common types of confidence scores include a decimal number between 0 and 1 (which can be interpreted as a percentage of confidence), a number between negative $\infty$ and positive $\infty$, or a set of expressions (e.g., "low," "medium," and "high"). Various post-processing calibration techniques may also be employed in an attempt to obtain a more accurate confidence score, for example temperature scaling, batch normalization, weight decay, negative log likelihood (NLL), etc.

"Neurons" in a neural network are mathematical functions that that are typically based on the functioning of a biological neuron. Neurons receive weighted input and have a summation and an activation function that governs whether they pass output to the next layer. This activation function may be a nonlinear threshold activity function where nothing happens if the value is below a threshold, but then the function linearly responds above the threshold (i.e., a rectified linear unit (ReLU) nonlinearity). Summation functions and ReLU functions are used in deep learning since real neurons can have approximately similar activity functions. Via linear transforms, information can be subtracted, added, etc. In essence, neurons act as gating functions that pass output to the next layer as governed by their underlying mathematical function. In some embodiments, different functions may be used for at least some neurons.

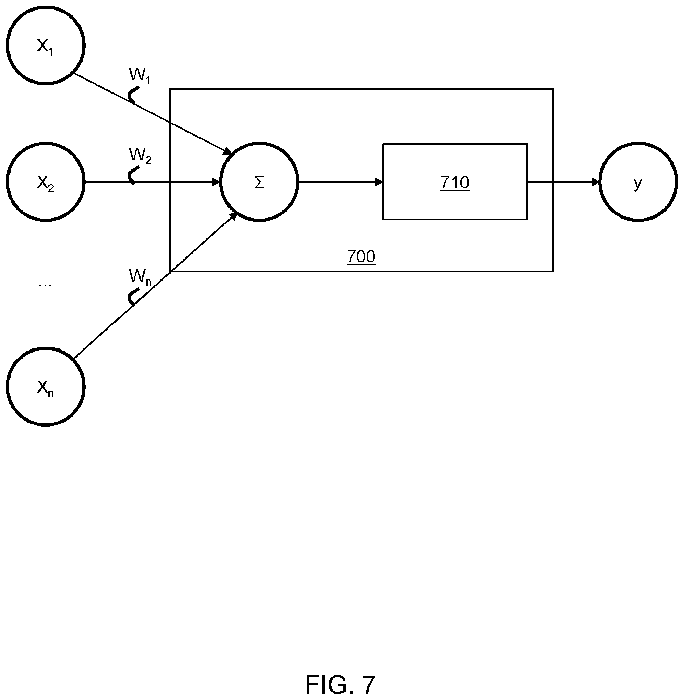

An example of a neuron 700 is shown in FIG. 7. Inputs $x_1, x_2, ..., x_n$ from a preceding layer are assigned respective weights $w_1, w_2, ..., w_n$. Thus, the collective input from preceding neuron 1 is $w_1 x_1$. These weighted inputs are used for the neuron's summation function modified by a bias, for example as seen in Equation 1:

$$\sum_{i=1}^{m}(w_i x_i) + bias \qquad\qquad\qquad \text{Equation 1}$$

This summation is compared against an activation function $f(x)$ (as represented by block 710) to determine whether the neuron "fires". For instance, $f(x)$ may be given as seen in Equation 2:

$$f(x) = \begin{cases} 1 \text{ if } \sum wx + bias \geq 0 \\ 0 \text{ if } \sum wx + bias < 0 \end{cases}$$

Equation 2

The output y of neuron 700 may thus be given as seen in Equation 3:

$$y = f(x)\sum_{i=1}^{m}(w_i x_i) + bias$$

Equation 3

In this case, neuron 700 is a single-layer perceptron. However, any suitable neuron type or combination of neuron types may be used without deviating from the scope of the one or more embodiments herein. It should also be noted that the ranges of values of the weights and/or the output value(s) of the activation function may differ in some embodiments without deviating from the scope of the one or more embodiments herein.

The goal, or "reward function" is often employed, for example for this case the successful identification of graphical elements in the image. A reward function explores intermediate transitions and steps with both short-term and long-term rewards to guide the search of a state space and attempt to achieve a goal (e.g., successful identification of graphical elements, successful identification of a next sequence of activities for an RPA workflow, etc.).

During training, various labeled data (in this case, images) are fed through neural network 600. Successful identifications strengthen weights for inputs to neurons, whereas unsuccessful identifications weaken them. A cost function, for eample mean square error (MSE) or gradient descent may be used to punish predictions that are slightly wrong much less than predictions that are very wrong. If the performance of the AI/ML model is not improving after a certain number of training iterations, a data scientist may modify the reward function, provide indications of where non-identified graphical elements are, provide corrections of misidentified graphical elements, etc.

Backpropagation is a technique for optimizing synaptic weights in a feedforward neural network. Backpropagation may be used to "pop the hood" on the hidden layers of the neural network to see how much of the loss every node is responsible for, and subsequently updating the weights in such a way that minimizes the loss by giving the nodes with higher error rates lower weights, and vice versa. In other words, backpropagation allows data scientists to repeatedly adjust the weights so as to minimize the difference between actual output and desired output.

The backpropagation algorithm is mathematically founded in optimization theory. In supervised learning, training data with a known output is passed through the neural network and error is computed with a cost function from known target output, which gives the error for backpropagation. Error is computed at the output, and this error is transformed into corrections for network weights that minimizes the error.

In the case of supervised learning, an example of backpropagation is provided below. A column vector input x is processed through a series of N nonlinear activity functions $f_i$ between each layer i = 1, ..., N of the network, with the output at a given layer first multiplied by a synaptic matrix $W_i$, and with a bias vector $b_i$ added. The network output o, given by Equation 4.

$$o = f_N(W_N f_{N-1}(W_{N-1} f_{N-2}(...f_1(W_1 x + b_1)...) + b_{N-1}) + b_N) \qquad \text{Equation 4}$$

In some embodiments, o is compared with a target output t, resulting in an error $E = \frac{1}{2}\|o - t\|^2$, which is desired to be minimized.

Optimization in the form of a gradient descent procedure may be used to minimize the error by modifying the synaptic weights $W_j$ for each layer. The gradient descent procedure requires the computation of the output o given an input x corresponding to a known target output t, and producing an error o - t. This global error is then propagated backwards giving local errors for weight updates with computations similar to, but not exactly the same as, those used for forward propagation. In particular, the backpropagation step typically requires an activity function of the form $p_j\left(n_j\right) = f_j'\left(n_j\right)$, where $n_j$ is the network activity at layer j (i.e., $n_j = W_j o_{j-1} + b_j$) where $o_j = f_j(n_j)$ and the apostrophe ' denotes the derivative of the activity function f.

The weight updates may be computed via Equation 5, Equation 6, Equation 7, Equation 8, and Equation 9:

$$d_j = \begin{cases} (o - t) \circ p_j\left(n_j\right), & j = N \\ W_{j+1}^{\mathrm{T}} d_{j+1} \circ p_j\left(n_j\right), & j < N \end{cases} \qquad \text{Equation 5}$$

$$\frac{\partial E}{\partial W_{j+1}} = d_{j+1}\left(o_j\right)^{\mathrm{T}} \qquad \text{Equation 6}$$

$$\frac{\partial E}{\partial b_{j+1}} = d_{j+1} \qquad \text{Equation 7}$$

$$W_j^{\mathrm{new}} = W_j^{\mathrm{old}} - \eta \frac{\partial E}{\partial W_j} \qquad \text{Equation 8}$$

$$b_j^{\mathrm{new}} = b_j^{\mathrm{old}} - \eta \frac{\partial E}{\partial b_j} \qquad \text{Equation 9}$$

where $\circ$ denotes a Hadamard product (i.e., the element-wise product of two vectors), $^{\mathrm{T}}$ denotes the matrix transpose, and $o_j$ denotes $f_j(W_j o_{j-1} + b_j)$, with $o_0 = x$. Here, the learning rate $\eta$ is chosen with respect to machine learning considerations. Below, $\eta$ is related to the neural Hebbian learning mechanism used in the neural implementation. Note that the synapses W and b can be combined into one large synaptic matrix, where it is assumed that the input vector has appended ones, and extra columns representing the b synapses are subsumed to W.

The AI/ML model may be trained over multiple epochs until it reaches a good level of accuracy (e.g., 97% or better using an F2 or F4 threshold for detection and approximately 2,000 epochs). This accuracy level may be determined in some embodiments using an F1 score, an F2 score, an F4 score, or any other suitable technique without deviating from the scope of the one or more embodiments herein. Once trained on the training data, the AI/ML model may be tested on a set of evaluation data that the AI/ML model has not encountered before. This helps to ensure that the AI/ML model is not "over fit" such that it identifies graphical elements in the training data well, but does not generalize well to other images.

In some embodiments, it may not be known what accuracy level is possible for the AI/ML model to achieve. Accordingly, if the accuracy of the AI/ML model is starting to drop when analyzing the evaluation data (i.e., the model is performing well on the training data, but is starting to perform less well on the evaluation data), the AI/ML model may go through more epochs of training on the training data (and/or new training data). In some embodiments, the AI/ML model is only deployed if the accuracy reaches a certain level or if the accuracy of the trained AI/ML model is superior to an existing deployed AI/ML model.

In certain embodiments, a collection of trained AI/ML models may be used to accomplish a task, for example employing an AI/ML model for each type of graphical element of interest, employing an AI/ML model to perform OCR, deploying yet another AI/ML model to recognize proximity relationships between graphical elements, employing still another AI/ML model to generate an RPA workflow based on the outputs from the other AI/ML models, etc. This may collectively allow the AI/ML models to enable semantic automation, for instance.

Some embodiments may use transformer networks for example SentenceTransformers™, which is a Python™ framework for state-of-the-art sentence, text, and image embeddings. Such transformer networks learn associations of words and phrases that have both high scores and low scores. This trains the AI/ML model to determine what is close to the input and what is not, respectively. Rather than just using pairs of words/phrases, transformer networks may use the field length and field type, as well.

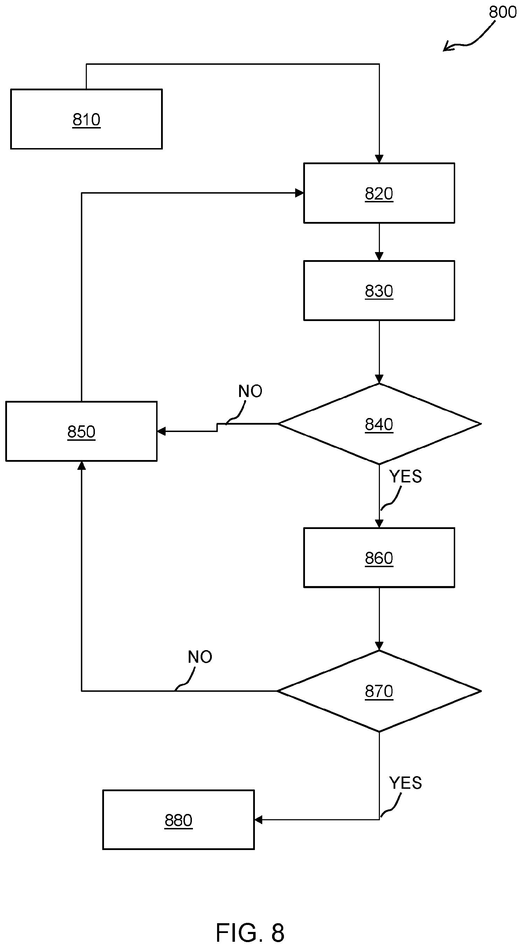

FIG. 8 is a flowchart illustrating a process 800 for training AI/ML model(s) according to one or more embodiments. Note that the process 800 can also be applied to other UI learning operations, for example for NLP and chatbots. The process begins with training data, for example providing labeled data as illustrated in FIG. 8, for example labeled screens (e.g., with graphical elements and text identified), words and phrases, a "thesaurus" of semantic associations between words and phrases such that similar words and phrases for a given word or phrase can be identified, etc. at block 810. The nature of the training data that is provided can depend on the objective that the AI/ML model is intended to achieve. The AI/ML model is then trained over multiple epochs at block 820 and results are reviewed at block 830.

If the AI/ML model fails to meet a desired confidence threshold at decision block 840 (the process 800 proceeds according to the NO arrow), the training data is supplemented and/or the reward function is modified to help the AI/ML model achieve its objectives better at block 850 and the process returns to block 820. If the AI/ML model meets the confidence threshold at decision block 840 (the process 800 proceeds according to the YES arrow), the AI/ML model is tested on evaluation data at block 860 to ensure that the AI/ML model generalizes well and that the AI/ML model is not over fit with respect to the training data. The evaluation data may include screens, source data, etc. that the AI/ML model has not processed before. If the confidence threshold is met at decision block 870 for the evaluation data (the process 800 proceeds according to the Yes arrow), the AI/ML model is deployed at block 880. If not (the process 800 proceeds according to the NO arrow), the process returns to block 880 and the AI/ML model is trained further.

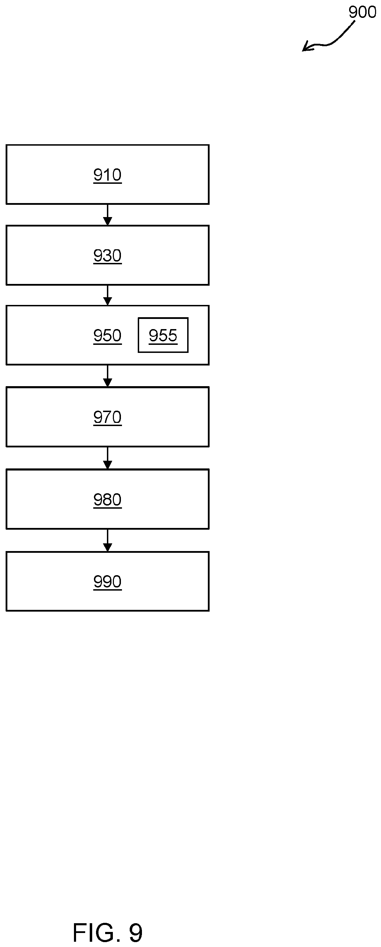

FIG. 9 is a flowchart illustrating a process 900 for providing an interface engine according to one or more embodiments. Generally, the process 900 provides example operations of an interface engine that detects UI elements that are not visible on a display (e.g., a display 525 of FIG. 5 or a screen that is presenting a UI including the UI elements).

The process 800 performed in FIG. 8 and the process 900 performed in FIG. 9 may be performed by a computer program, encoding instructions for the processor(s), in accordance with one or more embodiments. The computer program may be embodied on a non-transitory computer-readable medium. The computer-readable medium may be, but is not limited to, a hard disk drive, a flash device, RAM, a tape, and/or any other such medium or combination of media used to store data. The computer program may include encoded instructions for controlling processor(s) of a computing system (e.g., processor(s) 510 of computing system 500 of FIG. 5) to implement all or part of the process steps described in FIGS. 8-9, which may also be stored on the computer-readable medium.

The process 900 begins at block 910, where a screen presents a UI. The screen is a display as described herein. The III can include one or more web browser windows or interface frames, as well as icons, toolbars, etc.

The UI can include a page. The page can be a webpage within one of the web browser windows or interface frames. The page can have one or more layers that form a stacking structure. The web browser window or interface frame can expand to edges of the screen or occupy a portion thereof. The web browser window or interface frame can include scroll bars that enable browsing of the page. The page can be larger than the borders of the web browser or interface frame. The page can be larger than the screen. Thus, the page can be partially displayed by the screen, such that a visible region of the page is bounded by the borders of the web browser window or the interface frame (e.g., regardless of whether the web browser window or the interface frame is fully expanded to the edges of the screen) and that invisible regions of the page can be brought into view upon manipulation of the scroll bars or the screen. For ease of explanation, with respect to the process 900, the borders of the web browser window or the interface frame and the edges of the screen are contemporaneous.

The page can include a long form therein. The page and/or long form can include UI elements. The page, the long form, and the UI elements are identified, itemized, and described by a DOM. The DOM is a cross-platform and language-independent mechanism that provides the UI elements as a tree structure with each node representing a part of the page and/or long form. In an example, the DOM can include HTML structures for each UI element. The UI elements can include input fields, for example such drop-downs, check boxes, radio buttons, and other interactive elements. Each UI element can be identified by a type, for example DOM types, framework types, CV types, or element definition types. Thus, inputs fields and corresponding types can be found in the DOM by the interface engine.

At block 930, the interface engine performs a DOM text extraction. The DOM text extraction includes when the interface engine analyzes the DOM of the page to determine from the DOM text therein which of the UI elements are possibly relevant for automatic completion or filing-in.

According to one or more embodiments, the interface engine analyzes DOM text of the DOM of the page to find all nodes for UI elements. The interface engine extracts each node and related DOM text corresponding to a UI element in the DOM for possible relevant elements. For instance, relevant elements can be input fields of the long form and respective labels to the input fields. Note that a problem with the DOM of the page is that 'what is an input field' and 'what is a container' may not be clear. The interface engine solves this problem by automatically filtering out all unwanted context and capturing only relevant text while analyzing/extracting the DOM.

According to one or more embodiment, the interface engine produces a filtered DOM. The filtered DOM includes filtered elements, for example one or more relevant UI elements determined from the possible relevant elements. For example, as a first relevant element is determined, the interface engine generates (i.e., creates) the filtered DOM (e.g., an element list). As each subsequent relevant element is determined, the interface engine builds (i.e., adds to) the element list. Thus, the element list is an itemization of the one or more relevant III elements with a corresponding text from the DOM. The corresponding text can include, but is not limited to, depth hierarchy, geometrical positioning, types, and text values of filtered elements.

According to one or more embodiment, the interface engine can analyze the page using an ML model, for example an anchoring/relation model. For instance, depth hierarchy, geometrical positioning, types, and text values can be aspects of the anchoring/relation model that determines relevant DOM text (e.g., HTML structure) related to various input fields. The anchoring/relation model can determine the relevant DOM text as further described herein.

At block 950, the interface engine performs a CV Analysis. The CV analysis is performed on the visible region. According to one or more embodiments, the interface engine performs the CV analysis to determine types of the one or more relevant UI elements within the visible region. For instance, to determine a type of an input field, a visible region of the page is captured by the interface engine as a screenshot. The interface engine puts the screenshot through the CV analysis to identify the types of all the input fields on the visible region.

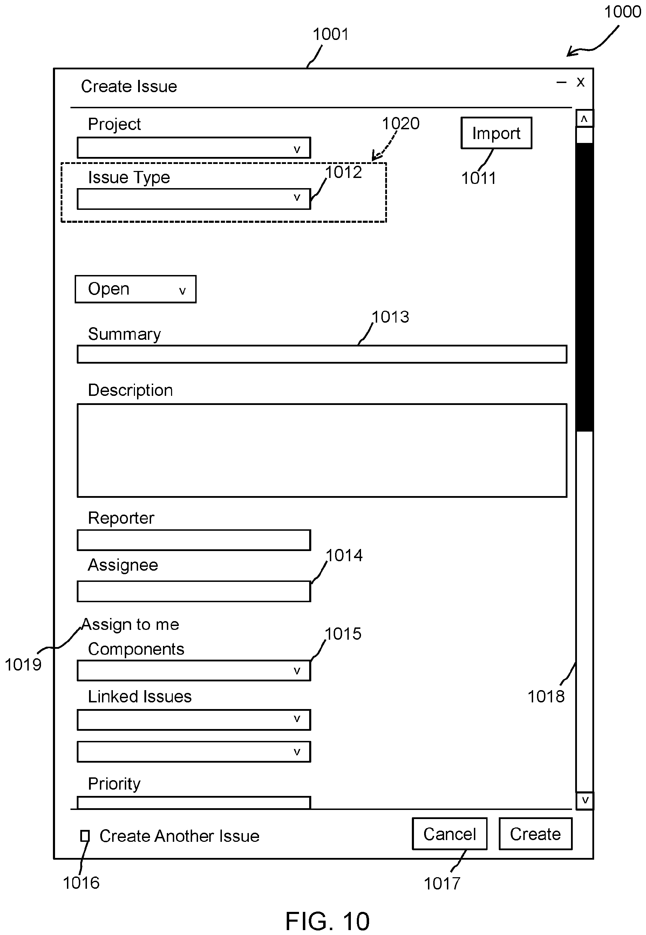

Turning to FIG. 10, an interface 1000 is depicted according to one or more embodiments. The interface 1000 is an example of page shown within a border of an interface frame that is contemporaneous with edges of a screen. Thus, a visible region 1001 of the page of the interface 1000 is within the border of the interface frame and the edges of the screen, while invisible regions are not shown. The interface 1000 includes a plurality of elements, for example elements 1011, 1012, 1013, 1014, 1015, 1016, 1017, 1018, and 1019. Note that the element 1018 is a scroll bar that can be manipulated to move the invisible regions of the page into the portions of the visible region 1001.

According to one or more embodiments, the interface engine identifies some of the plurality of elements as unwanted context, for example the element 1019 (i.e., the "Assign to me' text) has been previously filtered. According to one or more embodiments, the interface engine identifies some of the plurality of elements as relevant UI elements or input fields, for example the element 1012 (i.e., an 'Issue type' field) requires a type identification. According to one or more embodiments, the interface engine can use the element list with the filtered DOM to identify the relevant UI elements of the visible region 1001.

The interface engine performs the CV analysis on the visible region 1001 to identify types for these relevant III elements. By way of example, the interface 1000 shows that the element 1012 can be determined by the interface engine as a drop-down type from the CV analysis. Further, the interface engine determines a structure of the element 1012 from the filtered DOM.

Returning to FIG. 9, and as represented by sub-block 955, the CV analysis can be stored in a cache by the interface engine. The cache can be part of a memory, for example in the memory 515 of FIG. 5. The interface engine can use information in the cache when a similar long form is indicated as a destination form (e.g., on a subsequent page (e.g., a second page that can be in a different interface frame than a current page). A technical effect, advantage, and benefit of the interface engine includes that the interface engine uses the cache to infer and identify input fields of invisible regions and of other pages/destination form without performing an additional CV analysis.

At block 970, the interface engine performs extrapolating. Extrapolating by the interface engine enables the interface engine to determine (e.g., identify and understand) what type of offscreen elements exist. The interface engine extrapolates one or more target UI elements of an invisible region. The one or more target UI elements are a sub-set of the one or more UI elements of the long form or the page. The invisible region can be parts of the long form or the page that are outside of the web browser window or the interface frame. The extrapolating of the one or more target UI elements by the interface engine includes searching for similar HTML structures from the DOM or the filtered DOM.

According to one or more embodiments, a ML model of the interface engine determines an HTML structure for the identified input fields of the visible region and uses that HTML structure to find a lookalike HTML structure in the invisible region. In turn, using the ML model, the interface engine extrapolates relevant UI elements of the visible region as target UI elements in the invisible region. By way of example, the interface engine determines a structure of an input field from a visible region using relevant DOM extracted text and the CV analysis. The structure of the input field can include classes and attributes of an HTML portion related to an identified field from the relevant DOM extracted text and the CV analysis. The relevant DOM extracted text is, then, searched for similar structures to identify other like input fields in the invisible region of the screen. For example, if the CV analysis determines that the element on the visible region of the screen is a drop-down type of an input field, then the corresponding HTML structure of the input field is determined from the filtered DOM text. The HTML structure related to drop-down type is searched from the DOM text related to the invisible region and, accordingly, all drop-down type input fields in the invisible region are identified.

At block 980, the interface engine performs a schema extraction. According to one or more embodiments, the schema extraction can be an anchoring of elements of a certain type to those a user can interact with. In this way, by anchoring, the interface engine links the DOM text to corresponding types of the relevant UI elements as determined by the CV analysis that connects or creates associations between fields and labels.

By way of example with respect to a ML model of the interface engine, the extracted DOM and type of all the input fields are fed into the ML model. The ML model of the interface engine determines the relevant DOM text (e.g., HTML structure) related to the various input fields. To determine the relevant DOM text, the interface engine embeds information by encoding and incorporating translational and scale invariant features for the ML model (note that the features can be based on information already extracted by the interface engine). The translational and scale invariant features are then fed through various layers of the ML model, for example appropriate attention, convolutions, fully connected, etc. A predictor of the ML model computes logits responsible to assign the appropriate relations between input fields and labels.

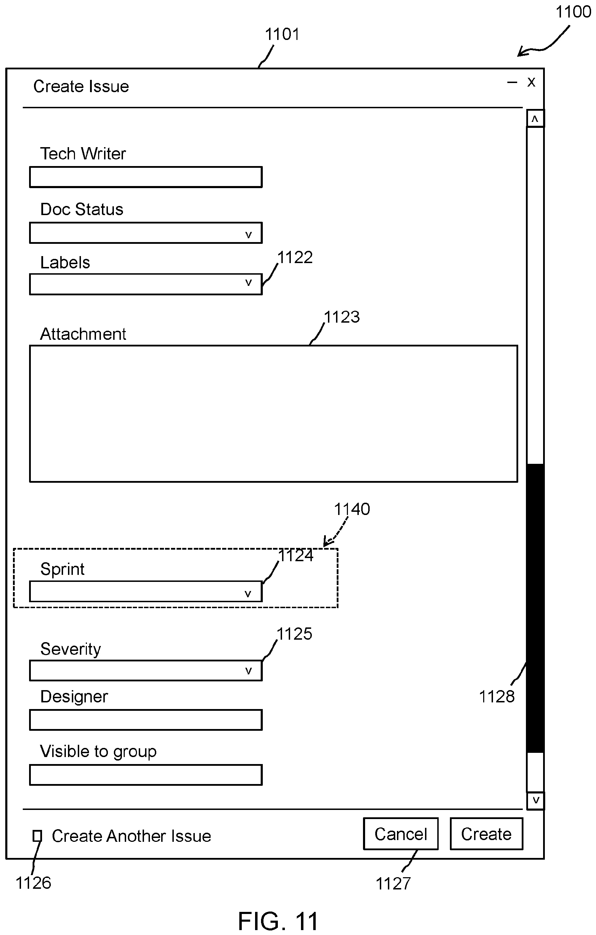

Turning to FIG. 11, an interface 1100 is depicted according to one or more embodiments. The interface 1100 is an example of page shown within a border of an interface frame that is contemporaneous with edges of a screen. Thus, a visible region 1101 of the page of the interface 1100 is within the border of the interface frame and the edges of the screen, while invisible regions are not shown. The interface 1100 includes a plurality of elements, for example elements 1122, 1123, 1124, 1125, 1126, 1127, and 1128. Note that the element 1128 is a scroll bar that can be manipulated to move the invisible regions of the page into the portions of the visible region 1101. Note that prior to manipulating the element 1128, the elements 1122, 1123, 1124, 1125, 1126, 1127, and 1128 where not part of the visible region 1001 of FIG. 10. Accordingly, the interface engine is an example of identifying elements (e.g., the element 1140) from an invisible region of interface 1000 of FIG. 10 having similar HTML structure of the element 1020 of FIG. 10 and, then, a scrolled view. In this regard, the interface 1100 shows that the element 1140 is identified as a drop-down type input field.

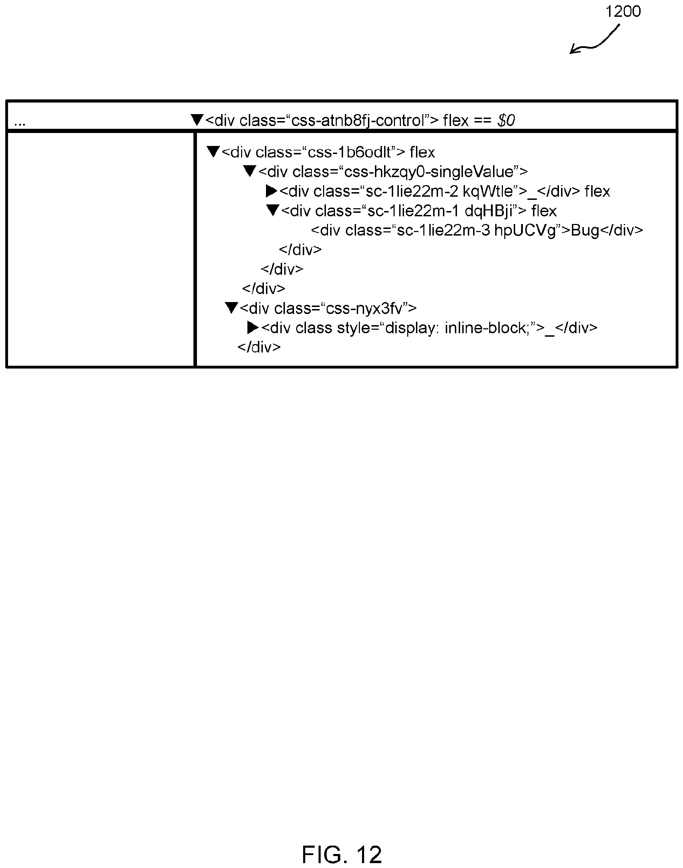

Turning to FIG. 12, an example code 1200 is depicted according to one or more embodiments. The example code 1200 is an example of a HTML structure of the DOM for a drop-down field in a visible region.

A problem can occur where UI elements in an invisible region do not have similar input fields in a visible region. A conventional clipboard technology would require a user to scroll to an input field of the invisible region to take a screenshot for CV analysis to determine an input field type. According to one or more embodiments, scrolling can be avoided by the interface engine and extrapolating structure elements can be completed using the cache. Thus, the interface solves the problem where UI element in an invisible region do not have similar input fields in a visible region.

Returning to FIG. 9, at block 990, the interface engine inputs data. The interface engine extracts data from a source to paste into at least the one or more target III elements. According to one or more embodiment, the interface engine inputs the data from the source into the one or more target UI elements. That is, once the fields are identified, various methods can be employed by the interface engine to type the data into the input fields, for example by using RPAs. The data entry can be completed by the interface engine with or without scrolling the page. The interface engine can receive an option for scrolling so the automation of data entry can be viewed. The data can be inputted into the same long form and/or a similar long form (e.g., a destination form) of a subsequent page.

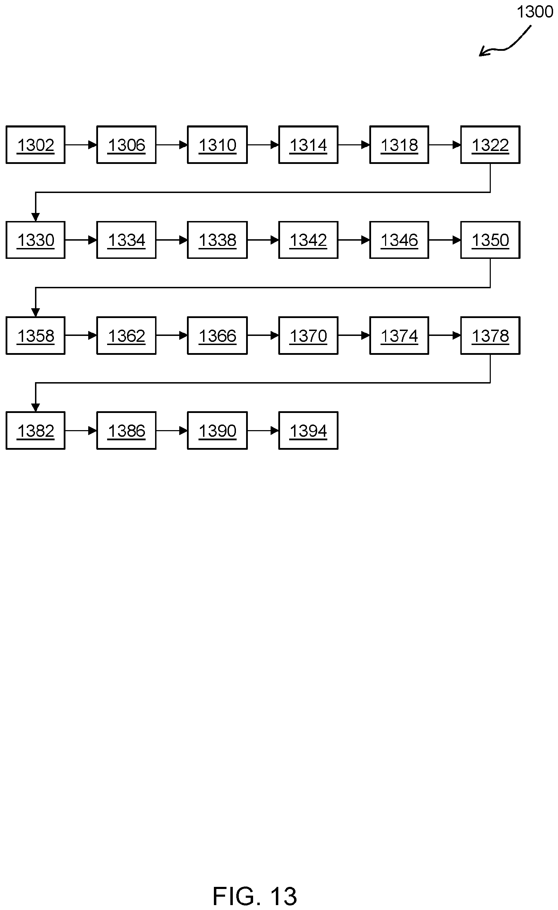

FIG. 13 depicts a flowchart illustrating a process 1300 according to one or more embodiments. The process 1300 performed in FIG. 13 may be performed by a computer program, encoding instructions for the processor(s), in accordance with one or more embodiments. Generally, the process 1300 provides example operations of an interface engine that detects UI elements that are not visible on a display (e.g., a display 525 of FIG. 5 or a screen that is presenting a UI including the UI elements). For ease of explanation of the process 1300, a page (e.g., a webpage) is being shown by a UI presented on a display and the page is larger than the UI. Thus, the page has invisible and visible regions.

The process 1300 begins at block 1302, where the interface engine detects a framework. According to one or more embodiments, the interface engine can identify a framework by injecting 'detect-Framework.ts' into the page (e.g., PageWorld). One or more examples of frameworks include, but are not limited to, SAP and Workday.

At block 1306, the interface engine starts a CV analysis. According to one or more embodiments, the interface engine can start the CV analysis for visible content of the page. The CV analysis can be used to detect element types by CV.

At block 1310, the interface engine detects one or more layers. Note that the page can have multiple layers that form a stacking structure. For example, interacting with one UI element (e.g., a non-hidden element) can uncover other UI elements (e.g., hidden elements). Further, because only UI elements that are on a topmost layer are presented by the UI, the CV analysis is unable to capture all elements (e.g., covered elements). For instance, according to one or more embodiments, the interface engine can interact with UI elements that are covered by other elements (in other detected layers). The remaining operations of the process 1300 can be applied to each layer detected by the interface engine and can be repeated or looped as required by the interface engine. One or more of the remaining operations of the process 1300 can be performed by the interface engine, and can be performed in any order.

At block 1314, the interface engine extracts data. According to one or more embodiments, the interface engine can extract all non-hidden elements from the DOM using 'semantic-extractData.ts'. The interface engine can also create an array of WebElementData that can be used to compute a DOM tree and a schema. According to one or more embodiments, the interface engine can extract data by sequentially refining the DOM tree of the page to reach the schema. The schema can include a mapping between anchoring text and controls (e.g., input field, dropdown, etc.). Examples of the schema include: "First name" -> input_field1; "Last name" -> input_field2; "Country" -> dropdown1; etc. Note that a schema element can include an input element that upon interaction causes new features can appear within the UI.

At block 1318, the interface engine determines nodes (e.g., UiNodes). According to one or more embodiments, the interface engine can get UiNodes for all WebElementData.

At block 1322, the interface engine determines positions. According to one or more embodiments, the interface engine can get positions for all WebElementData.

At block 1330, the interface engine determines element types by DOM. According to one or more embodiments, the interface engine can detect element types using information from the DOM, for example tag, type, role, and aria attributes.

At block 1334, the interface engine determines element types by framework. According to one or more embodiments, the interface engine can detect element types using framework-specific rules. The framework-specific rules define a set of conditions for finding or identifying the elements. According to one or more embodiments, and by way of example, every website has DOM tree. Further, every element of the DOM tree has a tag and attributes, and possibly one or more children. The framework-specific rules define a set of conditions for finding or identifying the elements based on the tags, attributes, or children. For example, a first rule can identify elements with a particular tag (e.g., x = input), and a second rule can identify elements with a particular attribute (e.g., data automation identification with a particular value, input box, date selection, etc.). A number of rules of the framework-specific rules is governed by the page/document. If the page/document has ten (10) different control types, then the framework-specific rules can include ten (10) different rules.

At block 1338, the interface engine determines element types by CV. According to one or more embodiments, the interface engine can detect element types using information from the CV analysis. Further, according to one or more embodiments, the interface engine can create element definitions for CV elements. Element definitions are particular to a design of the page and can be composed of all tag, attributes, children, and child tags and attributes. The interface engine can match what is in a boundary box (e.g., a border around the element that appears during a design process) with an element in the page.

At block 1342, the interface engine determines element types by element definition. According to one or more embodiments, the interface engine can detect element type using element definitions. Note that the CV is working at a screen shot level, but the page has elements off screen. The interface engine works off screen to identify other elements like the elements in view based on tag and attributes for the element.

At block 1346, the interface engine fills auto anchors. According to one or more embodiments, the interface engine can detect anchors for elements using DOM element attributes and then provide corresponding values into one or more regions of the page. The DOM element attributes can include, but are not limited to, label[for], aria-labelled by, aria-label, and placeholder.

At block 1350, the interface engine fills date times. According to one or more embodiments, the interface engine can detect the date-time type, date-time component type, and date format based on attributes, class, and value and then provide corresponding values into one or more regions of the page.

At block 1358, the interface engine cleans elements. According to one or more embodiments, the interface engine can remove duplicate elements that refer to the same logical element (e.g., an input element might be detected by both CV and DOM).

At block 1362, the interface engine enriches elements. According to one or more embodiments, the interface engine can promote information from any inner input element to the parent (container) element (e.g. CV might detect a DIV element that represents a textbox). By way of example, during FillElementTypeByCV, the DIV element can be promoted to InputBox. The DIV element might contain a hidden <input> with the aria-labelledby attribute. During enrichment of the UI elements, the anchor can be promoted to the container element. Note that bocks 1302 to 1362 can performed for each layer and/or for each iframe inside any layer. The resulting DOMRawUiNodeElements can aggregated afterward.

At block 1366, the interface engine creates a data structure, for example a DOM tree. According to one or more embodiments, the interface engine can generate a simplified DOM tree structure from an aggregated array of DOMRawUiNodeElement.

At block 1370, the interface engine collects DOM relations. According to one or more embodiments, the interface engine can detect anchors for elements using DOM relations model (e.g., relational anchors generated the ML model). The DOM relations model is a custom ML model of the interface engine that finds anchors for input elements from the simplified DOM tree structure. Thus, the interface engine can infer the "schema" from a simplified DOM by using the custom ML model.

At block 1374, the interface engine collects drop-down information. According to one or more embodiments, the interface engine can find a relative position of drop-down arrow and populate DropdownInfo property of DOMRawUi-NodeElement.

At block 1378, the interface engine collects geometrical anchors. According to one or more embodiments, anchors are labels for inputs. When the interface engine detects something in an area, (e.g., an input box), then the interface engine gives that something (e.g., the input box) a label. Anchors, which are automatic anchors or auto-anchors, can be inferred from the DOM because the DOM has text to help labelling. Machine Learning anchors can include when the interface engine provides the DOM of the page to a model, and the model determines which anchors are for which inputs. Geometrical anchors are labels (e.g, with fixed rules) that are determined on position and alignment using the DOM and a position match with element. For the input UI elements that do not have an anchor, if possible, a geometrical anchor is assigned by the interface engine. Further, geometrical anchors can be searched using position-based, alignment-based, and hierarchy-based algorithms of the interface engine (e.g., the DOM tree can include containers and text and input box inside the containers). For example, the position-based algorithms of the interface engine are executed processes that find locations for input UI elements within the of the page so that the geometrical anchors can be assigned.

At block 1382, the interface engine collects radio groups. According to one or more embodiments, the interface engine can group all radio button elements into groups and search for the group's label.

At block 1386, the interface engine collects values. According to one or more embodiments, for every input element (e.g., dropdowns, chat box, radios, and anything that can be interacted with and set a value), a value is collected by the interface engine. For example, the interface engine retrieves what is provided in an input box of the first name. According to one or more embodiments, the interface engine can populate a value property of DOMRawUiNodeElement.

At block 1390, the interface engine collects date time groups. For example, a date time group can be a set of alphanumeric characters in a prescribed format that express one or more of a year, a month, a day of the month, an hour of the day, a minute of the hour, and a time zone. According to one or more embodiments, the interface engine can group all input elements for a date time group.

At block 1394, the interface engine determines a schema. According to one or more embodiments, the interface engine can create a schema from DOMRawUiNodeElements. Note that the schema can include a mapping between anchoring text and controls as described herein.

According to one or more embodiments, the processes 900 and 1300 herein can be implemented as an activity in designer application, for example UiPath Studio™. The activity can be utilized for semantic copy and paste from a set of source fields to a set of destination fields (e.g., that are in the visible/invisible regions of the screen). Further, all the cache captured during the CV analysis can also feed to the activity for dynamic detection of UI elements of invisible regions. Further, the processes 900 and 1300 herein can be implemented with respect to task mining.

The computer program can be implemented in hardware, software, or a hybrid implementation. The computer program can be composed of modules that are in operative communication with one another, and which are designed to pass information or instructions to display. The computer program can be configured to operate on a general-purpose computer, an ASIC, or any other suitable device.

It is readily understood that the components of various embodiments, as generally described and illustrated in the figures herein, may be arranged and designed in a wide variety of different configurations. Thus, the detailed description of the embodiments, as represented in the attached figures, is not intended to limit the scope as claimed, but is merely representative of selected embodiments.

The features, structures, or characteristics described throughout this specification may be combined in any suitable manner in one or more embodiments. For example, reference throughout this specification to "certain embodiments," "some embodiments," or similar language means that a particular feature, structure, or characteristic described in connection with the embodiment is included in at least one embodiment. Thus, appearances of the phrases "in certain embodiments," "in some embodiment," "in other embodiments," or similar language throughout this specification do not necessarily all refer to the same group of embodiments and the described features, structures, or characteristics may be combined in any suitable manner in one or more embodiments.

It should be noted that reference throughout this specification to features, advantages, or similar language does not imply that all of the features and advantages that may be realized should be or are in any single embodiment. Rather, language referring to the features and advantages is understood to mean that a specific feature, advantage, or characteristic described in connection with an embodiment is included in or more embodiments. Thus, discussion of the features and advantages, and similar language, throughout this specification may, but do not necessarily, refer to the same embodiment.

Furthermore, the described features, advantages, and characteristics of the one or more embodiments herein may be combined in any suitable manner. One skilled in the relevant art will recognize that this disclosure can be practiced without one or more of the specific features or advantages of a particular embodiment. In other instances, additional features and advantages may be recognized in certain embodiments that may not be present in all embodiments.

One having ordinary skill in the art will readily understand that this disclosure may be practiced with steps in a different order, and/or with hardware elements in configurations which are different than those which are disclosed. Therefore, although this disclosure has been described based upon these preferred embodiments, it would be apparent to those of skill in the art that certain modifications, variations, and alternative constructions would be apparent, while remaining within the spirit and scope of this disclosure. In order to determine the metes and bounds of this disclosure, therefore, reference should be made to the appended claims.

## Claims

**1.** A method for detecting and automatically filling one or more user interface (UI) elements of a page that are not visible on a screen, the method being executed by an interface engine implemented as a computer program within a computing environment, the method comprising:

analyzing, by the interface engine, document object model (DOM) of the page to extract DOM text of one or more relevant UI elements of the one or more UI elements;

performing, by the interface engine, computer vision (CV) analysis to determine one or more types the one or more relevant III elements; and

extrapolating, by the interface engine, one or more target UI elements of an invisible region of the page from the one or more relevant UI elements.

2. The method of claim 1, wherein the method includes linking the DOM text to the one or more target UI elements based on the one or more types and the one or more relevant UI elements as determined by the CV analysis.

3. The method of claim 1, wherein the extrapolating of the one or more target UI elements by the interface engine comprises searching for similar hypertext markup language (HTML) structures from the DOM.

4. The method of claim 1, wherein the one or more UI elements comprises one or more input fields of the page.

5. The method of claim 1, wherein the interface engine extracts data from a source to paste into at least the one or more target UI elements.

6. The method of claim 1, wherein the one or more types of the one or more relevant UI elements comprise DOM types, framework types, CV types, or element definition types.

7. The method of claim 1, wherein the performing of the CV by the interface engine comprises capturing a visible region of the page to identify the one or more types of the one or more relevant UI elements in the visible region.

8. The method of claim 1, wherein the interface engine inputs data into the one or more target UI elements without scrolling the page.

9. The method of claim 1, wherein the page comprises a long form.

10. The method of claim 1, wherein the invisible region of the page comprises a destination form of a subsequent.

11. A system comprising:

a memory storing code of an interface engine for detecting and automatically filling one or more user interface (UI) elements of a page that are not visible on a screen; and

at least one processor configured to execute the code to cause within the system:

analyzing, by the interface engine, document object model (DOM) of the page to extract DOM text of one or more relevant UI elements of the one or more UI elements;

performing, by the interface engine, computer vision (CV) analysis to determine one or more types the one or more relevant UI elements; and

extrapolating, by the interface engine, one or more target III elements of an invisible region of the page from the one or more relevant UI elements.

12. The system of claim 11, wherein the interface engine links the DOM text to the one or more target UI elements based on the one or more types and the one or more relevant UI elements as determined by the CV analysis.

13. The system of claim 11, wherein the extrapolating of the one or more target UI elements by the interface engine comprises searching for similar hypertext markup language (HTML) structures from the DOM.

14. The system of claim 11, wherein the one or more UI elements comprises one or more input fields of the page.

15. The system of claim 11, wherein the interface engine extracts data from a source to paste into at least the one or more target III elements.

FIG. 1

FIG. 2

300

301

312    310    316

314

330    320

342

349    351    350    350

333    340    344    346

348

334

350    360    370

335

302

FIG. 3

FIG. 4

FIG. 5

FIG. 6

FIG. 7

FIG. 8

900

```
┌─────────────────────────┐
│           910           │
└─────────────────────────┘
             │
             ▼
┌─────────────────────────┐
│           930           │
└─────────────────────────┘
             │
             ▼
┌─────────────────────────┐
│    950     ┌───────┐    │
│            │  955  │    │
│            └───────┘    │
└─────────────────────────┘
             │
             ▼
┌─────────────────────────┐
│           970           │
└─────────────────────────┘
             │
             ▼
┌─────────────────────────┐
│           980           │
└─────────────────────────┘
             │
             ▼
┌─────────────────────────┐
│           990           │
└─────────────────────────┘
```

FIG. 9

FIG. 10

1100

1101

**Create Issue** — X

Tech Writer

Doc Status v

Labels 1122 v

Attachment 1123

1140

Sprint 1124 v

Severity 1125 v

Designer

Visible to group

1128

☐ Create Another Issue  | Cancel | Create |

1126

1127

FIG. 11

1200

| ... | ▼\<div class="css-atnb8fj-control"\> flex == *$0* |
|---|---|
|  | ▼\<div class="css-1b6odlt"\> flex<br>    ▼\<div class="css-hkzqy0-singleValue"\><br>       ▶\<div class="sc-1lie22m-2 kqWtle"\>_\</div\> flex<br>       ▼\<div class="sc-1lie22m-1 dqHBji"\> flex<br>           \<div class="sc-1lie22m-3 hpUCVg"\>Bug\</div\><br>      \</div\><br>     \</div\><br>    \</div\><br>  ▼\<div class="css-nyx3fv"\><br>    ▶\<div class style="display: inline-block;"\>_\</div\><br>  \</div\> |

FIG. 12

1300

1302 → 1306 → 1310 → 1314 → 1318 → 1322

1330 → 1334 → 1338 → 1342 → 1346 → 1350

1358 → 1362 → 1366 → 1370 → 1374 → 1378

1382 → 1386 → 1390 → 1394

FIG. 13

Europäisches
Patentamt

European
Patent Office

Office européen
des brevets

# EUROPEAN SEARCH REPORT

**Application Number**

EP 24 21 1095

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/390011 A1 (CSER TAMAS [US] ET AL) 16 December 2021 (2021-12-16) <br> * paragraph [0010] * <br> * paragraph [0046] * <br> * paragraph [0064] - paragraph [0065] * <br> * paragraph [0070] - paragraph [0071] * <br> * paragraph [0075] * <br> * paragraph [0089] * <br> * paragraph [0117] * <br> * paragraph [0124] * <br> - - - - - | 1-15 | INV. <br> G06F9/451 <br> G06F40/174 <br> G06N20/00 |
| A | EP 3 955 108 A1 (UIPATH INC [US]) 16 February 2022 (2022-02-16) <br> * paragraph [0010] - paragraph [0022] * <br> * paragraph [0056] * <br> * paragraph [0059] * <br> - - - - - | 1-15 | |
| | | | **TECHNICAL FIELDS SEARCHED (IPC)** <br><br> G06F <br> G06N |

The present search report has been drawn up for all claims

| Place of search | Date of completion of the search | Examiner |
|---|---|---|
| Munich | 10 March 2025 | Del Chiaro, Silvia |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## EP 4 550 132 A1

### ANNEX TO THE EUROPEAN SEARCH REPORT
### ON EUROPEAN PATENT APPLICATION NO.

EP 24 21 1095

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2025

| Patent document cited in search report | Publication date | Patent family member(s) | Publication date |
|---|---|---|---|
| US 2021390011 A1 | 16-12-2021 | AU 2019355933 A1 | 03-06-2021 |
| | | CA 3114899 A1 | 09-04-2020 |
| | | CN 113168339 A | 23-07-2021 |
| | | EP 3861437 A1 | 11-08-2021 |
| | | IL 281921 A | 31-05-2021 |
| | | JP 7398068 B2 | 14-12-2023 |
| | | JP 2022514155 A | 10-02-2022 |
| | | KR 20210100600 A | 17-08-2021 |
| | | US 2021390011 A1 | 16-12-2021 |
| | | WO 2020072701 A1 | 09-04-2020 |
| EP 3955108 A1 | 16-02-2022 | CN 114341788 A | 12-04-2022 |
| | | EP 3955108 A1 | 16-02-2022 |
| | | JP 2023537540 A | 04-09-2023 |
| | | KR 20220021377 A | 22-02-2022 |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10860905 B

- US 924499